# FASCICULE DE BREVET EUROPEEN

(11) **EP 1 451 783 B1**
(45) Date de publication et mention de la délivrance du brevet: **17.01.2007**
(21) Numéro de dépôt: 02796886.6
(22) Date de dépôt: 28.11.2002
(51) Int. Cl.: G07F 7/08, G07F 7/10

(54) **PROCEDE, SYSTEME ET DISPOSITIF PERMETTANT D'AUTHENTIFIER DES DONNEES TRANSMISES ET/OU RECUES PAR UN UTILISATEUR**
VERFAHREN, SYSTEM UND VORRICHTUNG ZUR AUTHENTIFIERUNG VON DURCH EINEN BENUTZER ÜBERTRAGENER UND/ODER EMPFANGENER DATEN
METHOD, SYSTEM AND DEVICE FOR AUTHENTICATING DATA TRANSMITTED AND/OR RECEIVED BY A USER

(30) Priorité: 28.11.2001 FR 0115356
(43) Date de publication de la demande: 01.09.2004
(73) Titulaire: Brion, Francois, 78530 Buc (FR); Leclerc, Patrice, 92340 Bourg la Reine (FR)
(72) Inventeur: Brion, Francois, 78530 Buc (FR); Leclerc, Patrice, 92340 Bourg la Reine (FR)
(74) Mandataire: Grynwald, Albert
(86) Numéro de dépôt international: PCT/FR2002/004084
(87) Numéro de publication internationale: WO 2003/046847

(56) Documents cités:
- WO-A-01/03078
- WO-A-01/09851
- WO-A-97/22092
- WO-A-98/47116
- WO-A1-99/00773
- FR-A- 2 765 985
- FR-A- 2 790 162
- US-A- 5 721 781
- US-B1- 6 292 898

## Description

### Préambule de la description

### Domaine concerné

La présente invention concerne un procédé, un système et un dispositif permettant d'authentifier des données transmises et/ou reçues par un utilisateur et relatives à une opération, notamment des données relatives à l'acquisition de biens ou de services ou à des opérations de retrait d'espèces. La présente invention s'applique plus particulièrement dans le cas où l'utilisateur dispose d'un objet nomade se présentant sous la forme d'une carte à microprocesseur, comprenant un code confidentiel, susceptible d'être accouplée à un terminal nomade.

Par authentification de données, au sens de la présente invention, on entend l'opération qui consiste, pour celui qui authentifie, à s'assurer que la personne ou l'objet authentifié est bien celle ou celui qu'il prétend être, et qu'il ne s'agit pas d'un leurre ; l'authentification doit être le plus souvent possible dynamique, c'est-à-dire qu'il ne doit pas être possible à un fraudeur qui aurait capté une séquence d'authentification, de réutiliser cette séquence avec succès.

### Problème posé

**1**. La présente invention vise à renforcer la sécurité des données transmises et/ou reçues par l'utilisateur et relatives à une opération, notamment des données relatives à l'acquisition de biens ou de services ou à des opérations de retrait d'espèces.
   La sécurité des données échangées entre l'utilisateur et le système permettant de réaliser l'opération peut être affectée de différentes façons :
   - les données communiquées par le système à l'utilisateur, par exemple le montant de la transaction, peuvent être altérées ;
   - les données communiquées par l'utilisateur au système peuvent être détournées de leur usage normal, par exemple le code confidentiel peut être enregistré à l'insu de l'utilisateur ;
   - l'utilisateur est tenu d'utiliser un terminal dont il ne peut être sûr de la « probité », d'où un risque de perte de confiance ; des terminaux automates « postiches » sont apparus et ont été à l'origine de fraudes ;
   - la validité de la date et de l'heure communiquées à la carte à microprocesseur pour certifier une transaction ne peut pas être garantie ;
   - dans certains cas, afin d'améliorer la sécurité, il pourrait être utile de connaître la localisation géographique du lieu où a été réalisée une transaction.

   Les problèmes ci-dessus mentionnés présentent toute leur acuité dans les cas suivants :
   - achat effectué sur un automate,
   - retrait dans un distributeur de billets,
   - paiement effectué à distance, notamment au moyen d'un ordinateur personnel (PC),
   - utilisation d'un porte-monnaie électronique, en particulier en mode sans contacts.
**2**. La présente invention vise à résoudre les problèmes qui trouvent leur origine dans le fait que l'utilisateur est tenu de se dessaisir de sa carte à microprocesseur.
   Ce dessaisissement présente en effet les inconvénients suivants :
   - Au plan de la sécurité.
      Il existe un risque de capture abusive de la carte par un automate - postiche, de duplication de celle-ci par un commerçant malhonnête, de détérioration physique ou logique de la carte
   - Au plan de la fiabilité.
      Il existe un risque d'usure des contacts de la carte et du dispositif de lecture.
   - Au plan de l'hygiène.
   - Au plan de l'inconfort psychologique du client qui est dépossédé de sa carte, même pendant un court instant. Il existe un risque d'oubli de la carte dans le lecteur.
3. La présente invention vise à accroître la rapidité des opérations. Il est souvent nécessaire de réaliser les opérations rapidement.
   - Or, l'insertion de la carte dans un lecteur et la récupération de celle-ci à l'issue de l'opération sont consommatrices de temps et allongent la durée de la transaction.
   - L'insertion de la carte dans un lecteur ralentit notablement le débit des clients notamment dans les cas suivants : péage d'autoroute, transports en commun, commerces à débit très rapide (kiosque à journaux, boulangeries...).

### Art antérieur

Différentes solutions ont été proposées pour résoudre en partie les problèmes ci-dessus exposés. La demande de brevet WO99/00773 décrit un procédé d'identification de l'utilisateur, et d'authentification mutuelle entre un terminal de vente et un téléphone mobile muni de sa carte SIM. Ces solutions n'ont pas toujours apporté les bénéfices escomptés. Les solutions proposées et les inconvénients associés sont explicités ci-après :
- Dessaisissement de la carte.
   Pour pallier aux inconvénients liés au dessaisissement de la carte, il a été préconisé de maintenir en permanence un contrôle visuel sur la carte et d'éviter d'introduire complètement celle-ci dans les distributeurs de billets où sont effectués les contrôles d'authentification. Ces solutions ont pour objet de permettre à l'utilisateur de pouvoir éventuellement retenir sa carte.
   Ces solutions sont aujourd'hui possibles car il est possible de bloquer une ou plusieurs fonctions de la puce, même dans le cas où elle n'a pas été complètement introduite dans le distributeur de billet. L'utilisation de la carte est ainsi rendue impossible pour l'utilisateur sans qu'il soit nécessaire de le priver de celle-ci.
- Paiement à distance
   Les Minitel Magis et les terminaux sécurisés lecteurs de carte à puce qui se connectent sur un ordinateur personnel (PC), dont le terminal Cyber-COMM^{™} constitue le modèle le plus avancé, sont limités à une utilisation en télépaiement à partir de l'équipement informatique de l'utilisateur. Ils ne permettent pas une communication directe avec un automate distant de quelques dizaines de centimètres.
- Téléphones portables
   Les téléphones portables bi-fentes ne résolvent pas les problèmes ci-dessus exposés car ils obligent l'utilisateur à se mettre en relation avec un serveur distant et induisent des coûts de téléphone supplémentaire.
- Automates et distributeurs de billets
   Les automates et les distributeurs de billets ne protègent pas les utilisateurs contre les risques de fraudes ci-dessus décrits, distributeurs de billets postiches ou modifiés par des fraudeurs.
- Utilisation d'un Porte Monnaie Electronique (PME) sans contact
   Le Porte Monnaie Electronique (PME) sans contact ne résout pas les problèmes posés. En effet, les expériences réalisées font apparaître que le mode de validation du paiement présente des inconvénients. L'utilisateur doit acquérir un geste qui n'est pas naturel au moins pour certains d'entre eux.
- Péages d'autoroutes
   Les sociétés d'autoroutes ont lancé des systèmes de télépéage, utilisant un badge identifiant le client. L'obligation d'abonnement a fait que ce système ne rencontre pas le succès escompté, l'utilisation restant marginale par rapport aux autres moyens de paiement.

### Solution

### Procédé

L'invention concerne un procédé permettant d'authentifier, au sens de la présente invention, des données transmises et/ou reçues par un utilisateur et relatives à une opération, notamment des données relatives à l'acquisition de biens ou de services ou à des opérations de retrait d'espèces.

L'utilisateur dispose d'un terminal nomade et d'un objet nomade se présentant sous la forme d'une carte à microprocesseur susceptible d'être accouplée au terminal nomade. Le procédé comprend l'étape d'établir une liaison informatique à courte distance entre le terminal nomade et une base locale. La base locale peut se présenter sous la forme d'un équipement informatique local ou d'un équipement informatique local connectable à un serveur distant. La liaison informatique est autonome, privée et spécifique au terminal nomade et à la base locale. Le procédé comprend en outre :
- l'étape, au niveau du terminal nomade, d'authentifier la base locale lorsque celle-ci est connectée au terminal nomade via la liaison informatique,
- l'étape d'authentifier la carte à microprocesseur,
- l'étape, pour l'utilisateur, de valider, au sens de la présente invention, les données,
- l'étape, pour l'utilisateur, de s'authentifier.

### Mode 1

De préférence, selon un premier mode de réalisation de l'invention, le procédé est tel que l'authentification de la carte à microprocesseur est effectuée au niveau de la base locale lorsque la carte à microprocesseur est accouplée au terminal nomade et lorsque le terminal nomade est connecté à la base locale via la liaison informatique. L'authentification met en oeuvre un processus d'échange de données entre la carte à microprocesseur et la base locale. Les données échangées transitent de manière transparente via le terminal nomade.

De préférence, selon l'invention le procédé est tel que l'utilisateur s'authentifie, vis-à-vis de la base locale, avec le terminal nomade, au moyen de la carte à microprocesseur lorsque la carte à microprocesseur est accouplée au terminal nomade.

De préférence, selon l'invention le procédé est tel que, pour s'authentifier vis-à-vis de la base locale :
- l'utilisateur entre un code confidentiel dans le terminal nomade,
- le code confidentiel est contrôlé par la carte à microprocesseur,
- la carte à microprocesseur émet un certificat de contrôle, destiné à être transmis à la base locale via le terminal nomade.

De préférence, selon l'invention le procédé comprend en outre l'étape, au niveau de la base locale, d'authentifier le terminal nomade lorsque celui-ci est connecté à la base locale via la liaison informatique. Le procédé selon l'invention comprend en outre l'étape d'inhiber l'authentification du terminal nomade par la base locale en cas d'attaque physique ou logique du terminal nomade.

### Mode 2

De préférence, selon un deuxième mode de réalisation de l'invention, le procédé est tel que l'authentification de la carte à microprocesseur est effectuée au niveau du terminal nomade lorsque la carte à microprocesseur est accouplée au terminal. Le procédé comprend en outre l'étape, au niveau de la base locale, d'authentifier le terminal nomade lorsque le terminal nomade est connecté à la base locale via la liaison informatique. Le procédé selon l'invention comprend en outre l'étape d'inhiber l'authentification du terminal nomade par la base locale en cas d'attaque physique ou logique du terminal nomade.

De préférence, selon l'invention le procédé est tel que l'authentification de la carte à microprocesseur met en oeuvre un processus d'échange de données entre la carte à microprocesseur et le terminal nomade.

De préférence, selon l'invention le procédé est tel que l'utilisateur s'authentifie, vis-à-vis du terminal, au moyen de la carte à microprocesseur lorsque la carte à microprocesseur est accouplée au terminal nomade.

De préférence, selon l'invention le procédé est tel que pour s'authentifier vis-à-vis du terminal nomade,
- l'utilisateur entre un code confidentiel dans le terminal nomade,
- le code confidentiel est contrôlé par la carte à microprocesseur,
- la carte à microprocesseur émet un certificat de contrôle, destiné à être transmis au terminal nomade.

### Mode 1 et Mode 2

Quel que soit le mode de réalisation du procédé selon l'invention, de préférence le procédé est tel qu'il comprend en outre l'étape d'enregistrer dans une zone mémoire du terminal nomade au moins une partie des données transmises et/ou reçues, notamment celles relatives à l'opération. Il résulte de la combinaison des traits techniques qu'il est possible d'enregistrer, dans le terminal, des données, qui peuvent être :
- antérieures à la réalisation d'une transaction ; par exemple les données qui figurent sur un ticket d'entrée d'un système de péage autoroutier fermé, ce qui permet la dématérialisation de ce ticket ;
- concomitantes à la réalisation d'une transaction ; par exemple les données qui figurent sur le ticket matérialisant la réalisation d'une transaction par carte de paiement ;
- consécutives à la réalisation d'une transaction d'achat ; par exemple les données qui figurent sur un titre de transport ou d'un billet donnant accès à un spectacle..., ce qui permet la dématérialisation de ce titre de transport ou de ce billet en l'enregistrant dans le terminal nomade sous forme de certificat électronique.

De préférence, selon l'invention, le procédé est tel qu'il comprend en outre l'étape, pour l'utilisateur, de lire des données confidentielles contenues dans la zone mémoire du terminal nomade après authentification de l'utilisateur au moyen de la carte à microprocesseur. Il résulte de la combinaison des traits techniques qu'il est possible de transférer, après authentification de l'utilisateur si nécessaire, les données du terminal vers un équipement informatique personnel 22, par exemple vers un PC ou vers un assistant personnel, pour traitement au moyen d'un logiciel idoine, par exemple un logiciel de comptabilité personnelle, des données relatives aux opérations effectuées avec une carte de paiement.

De préférence, selon l'invention, le procédé est tel qu'il comprend en outre :
- l'étape de déterminer la date, l'heure et les coordonnées géographiques de ladite opération,
- l'étape d'enregistrer dans une zone mémoire protégée du terminal nomade, la date, l'heure et les coordonnées géographiques de ladite opération.

Il résulte de la combinaison des traits techniques qu'il est possible d'horodater une opération et de situer géographiquement le lieu où elle a été réalisée. Il est ainsi possible de s'assurer que l'horloge du terminal d'un commerçant n'est pas décalée de façon trop importante par rapport à la réalité. D'autres applications sont envisageables : pointage en cas de chômage, vote électronique, contrôle des assignations à résidence, enchères électroniques, date, heure et lieu d'acceptation d'une offre contractuelle...

De préférence, selon l'invention, le procédé comprend en outre :
- l'étape, pour le terminal d'enrichir les données avec de nouvelles données, notamment la date, l'heure, les coordonnées géographiques, un historique d'opérations, des certificats,
- l'étape, pour le terminal, de certifier tout ou partie des données et/ou des nouvelles données.

### Système

L'invention concerne également un système permettant d'authentifier, au sens de la présente invention, des données transmises et/ou reçues par un utilisateur et relatives à une opération, notamment des données relatives à l'acquisition de biens ou de services ou à des opérations de retrait d'espèces.

Le système comprend :
- au moins un objet nomade se présentant sous la forme d'une carte à microprocesseur,
- au moins un terminal nomade susceptible d'être accouplé à l'objet nomade,
- une base locale pouvant se présenter sous la forme d'un équipement informatique local ou d'un équipement informatique local connectable à un serveur distant,
- une liaison informatique à courte distance entre le terminal nomade et la base locale.

La liaison informatique à courte distance est autonome, privée et spécifique au terminal nomade et à la base locale.

Le terminal nomade comprend :
- des premiers moyens d'authentification de la base locale lorsqu'elle est connectée au terminal nomade via la liaison informatique,
- des moyens de validation actionnables par l'utilisateur pour valider, au sens de la présente invention, les données.

Par valider les données, au sens de la présente invention, on entend selon le cas :
- soit une validation simple par appui sur une touche de validation du terminal nomade, par exemple pour une opération de paiement par porte-monnaie électronique ;
- soit une validation avec authentification du porteur par frappe sur le terminal nomade d'un code confidentiel puis appui sur une touche de validation, par exemple paiement au moyen d'une carte de débit/crédit.

Le système comprend en outre :
- des seconds moyens d'authentification pour authentifier la carte à microprocesseur,
- des troisièmes moyens d'authentification pour authentifier l'utilisateur.

### Mode 1

Selon un premier mode de réalisation, de préférence selon l'invention, le système est tel que les seconds moyens d'authentification de la carte à microprocesseur sont situés dans la base locale et procèdent aux opérations d'authentification lorsque la carte à microprocesseur est accouplée au terminal nomade et lorsque le terminal nomade est connecté à la base locale via la liaison informatique. Les seconds moyens d'authentification mettent en oeuvre un processus d'échange de données entre la carte à microprocesseur et la base locale. Les données échangées transitent de manière transparente via le terminal nomade.

De préférence, selon l'invention, le système est tel que les troisièmes moyens d'authentification coopèrent avec la carte à microprocesseur et avec la base locale pour authentifier l'utilisateur, vis-à-vis de la base locale, lorsque la carte à microprocesseur est accouplée au terminal nomade.

De préférence, selon l'invention, le système est tel que les troisièmes moyens d'authentification comportent :
- un organe de commande, situé dans le terminal nomade, permettant à l'utilisateur d'entrer un code confidentiel dans le terminal nomade et de transmettre le code à la carte à microprocesseur,
- un comparateur situé dans la carte à microprocesseur permettant de contrôler le code confidentiel,
- des moyens d'émission situés dans la carte à microprocesseur émettant, à destination de la base locale, via le terminal nomade, un certificat de contrôle.

De préférence, selon l'invention, le système comprend en outre des quatrièmes moyens d'authentification, situés dans la base locale, permettant à la base locale d'authentifier le terminal nomade lorsque celui-ci est connecté à la base locale via la liaison informatique. Le système selon l'invention comprend en outre des moyens inhibiteurs pour inhiber l'authentification du terminal nomade par la base locale en cas d'attaque physique ou logique du terminal nomade.

### Mode 2

Selon un deuxième mode de réalisation de l'invention, de préférence le système est tel que les seconds moyens d'authentification de la carte à microprocesseur sont situés dans le terminal nomade et procèdent aux opérations d'authentification lorsque la carte à microprocesseur est accouplée au terminal. Le système comprend en outre des quatrièmes moyens d'authentification situés dans la base locale permettant à la base locale d'authentifier le terminal nomade lorsque celui-ci est connecté à la base locale via la liaison informatique. Le système selon l'invention comprend en outre des moyens inhibiteurs pour inhiber l'authentification du terminal nomade par la base locale en cas d'attaque physique ou logique du terminal nomade.

De préférence, selon l'invention, le système est tel que les seconds moyens d'authentification mettent en oeuvre un processus d'échange de données entre la carte à microprocesseur et le terminal nomade.

De préférence, selon l'invention, le système est tel que les troisièmes moyens d'authentification coopèrent avec la carte à microprocesseur pour authentifier l'utilisateur lorsque la carte à microprocesseur est accouplée au terminal nomade.

De préférence, selon l'invention, le système est tel que les troisièmes moyens d'authentification comportent :
- un organe de commande, situé dans le terminal nomade, permettant à l'utilisateur d'entrer un code confidentiel dans le terminal nomade et de transmettre le code confidentiel à la carte à microprocesseur,
- un comparateur situé dans la carte à microprocesseur permettant de contrôler le code confidentiel,
- des moyens d'émission situés dans la carte à microprocesseur émettant, à destination du terminal nomade, un certificat de contrôle.

### Mode 1 et Mode 2

Quelque soit le mode réalisation de du système de l'invention, de préférence le système est tel que le terminal nomade comporte une zone mémoire dans laquelle est enregistrée au moins une partie des données transmises et/ou reçues, notamment celles relatives à l'opération.

Il résulte de la combinaison des traits techniques qu'il est possible d'enregistrer, dans le terminal, des données, qui peuvent être :
- antérieures à la réalisation d'une transaction ; par exemple les données qui figurent sur un ticket d'entrée d'un système de péage autoroutier fermé, ce qui permet la dématérialisation de ce ticket ;
- concomitantes à la réalisation d'une transaction ; par exemple les données qui figurent sur le ticket matérialisant la réalisation d'une transaction par carte de paiement ;
- consécutives à la réalisation d'une transaction d'achat ; par exemple les données qui figurent sur un titre de transport ou d'un billet donnant accès à un spectacle..., ce qui permet la dématérialisation de ce titre de transport ou de ce billet en l'enregistrant dans le terminal nomade sous forme de certificat électronique.

De préférence, selon l'invention, le système est tel que le terminal nomade comporte des moyens de lecture actionnables par l'utilisateur permettant de lire des données confidentielles contenues dans la zone mémoire du terminal nomade après authentification de l'utilisateur au moyen de la carte à microprocesseur.

Il résulte de la combinaison des traits techniques qu'il est possible de transférer, après authentification de l'utilisateur si nécessaire, les données du terminal vers un équipement informatique personnel, par exemple un PC ou un assistant personnel, pour traitement au moyen d'un logiciel idoine, par exemple un logiciel de comptabilité personnelle, des données relatives aux opérations effectuées avec la carte.

De préférence, selon l'invention, le système est tel que le terminal nomade comporte :
- des moyens de calcul couplés à une horloge et à un dispositif de localisation notamment du type GPS pour calculer la date, l'heure et les coordonnées géographiques de l'opération,
- des moyens d'enregistrement pour enregistrer dans une zone mémoire protégée du terminal nomade, la date, l'heure et les coordonnées géographiques de l'opération.

Il résulte de la combinaison des traits techniques qu'il est possible d'horodater une opération et de situer géographiquement le lieu où elle a été réalisée. Il est ainsi possible de s'assurer que l'horloge du terminal d'un commerçant n'est pas décalée de façon trop importante par rapport à la réalité. D'autres applications sont envisageables : pointage en cas de chômage, vote électronique, contrôle des assignations à résidence, enchères électroniques, date, heure et lieu d'acceptation d'une offre contractuelle...

De préférence, selon l'invention, le système est tel que le terminal nomade comporte des moyens de calcul :
- enrichissant les données avec de nouvelles données, notamment la date, l'heure, les coordonnées géographiques, un historique d'opérations, des certificats,
- certifiant tout ou partie des données et/ou des nouvelles données.

### Terminal nomade

L'invention concerne également un terminal nomade permettant d'authentifier, au sens de la présente invention, des données transmises et/ou reçues par un utilisateur et relatives à une opération, notamment des données relatives à l'acquisition de biens ou de services ou à des opérations de retrait d'espèces. Le terminal nomade est susceptible d'être accouplé à un objet nomade se présentant sous la forme d'une carte à microprocesseur. Le terminal nomade est susceptible d'être connecté, via une liaison informatique à courte distance, à une base locale pouvant se présenter sous la forme d'un équipement informatique local ou d'un équipement informatique local connectable à un serveur distant. La liaison informatique est autonome, privée et spécifique au terminal nomade et à la base locale. Le terminal nomade comporte :
- des premiers moyens d'authentification de la base locale lorsqu'elle est connectée au terminal nomade via la liaison informatique,
- des moyens de validation actionnables par l'utilisateur pour valider, au sens de la présente invention, les données.

Par valider les données, au sens de la présente invention, on entend selon le cas :
- soit une validation simple par appui sur une touche de validation du terminal nomade, par exemple pour une opération de paiement par porte-monnaie électronique ;
- soit une validation avec authentification du porteur par frappe sur le terminal nomade d'un code confidentiel puis appui sur une touche de validation, par exemple paiement au moyen d'une carte de débit/crédit.

### Mode 1

Selon un premier mode de réalisation de l'invention, de préférence le terminal nomade est tel que, lorsque la carte à microprocesseur est accouplée au terminal nomade et lorsque le terminal nomade est connecté à la base locale via la liaison informatique, des seconds moyens d'authentification de la carte à microprocesseur, situés dans la base locale, procèdent à des opérations d'authentification de la carte à microprocesseur. Les opérations d'authentification mettent en oeuvre un processus d'échange de données entre la carte à microprocesseur et la base locale. Les données échangées transitent de manière transparente via le terminal nomade.

De préférence, selon l'invention, le terminal nomade est tel que, lorsque la carte à microprocesseur est accouplée au terminal nomade, des troisièmes moyens d'authentification coopèrent avec la carte à microprocesseur et avec la base locale pour authentifier l'utilisateur vis-à-vis de la base locale.

De préférence, selon l'invention, le terminal nomade comporte un organe de commande permettant à l'utilisateur d'entrer un code confidentiel dans le terminal nomade et de transmettre le code à la carte à microprocesseur. La carte à microprocesseur comporte un comparateur permettant de contrôler le code confidentiel. La carte à microprocesseur comporte en outre des moyens d'émission émettant, à destination de la base locale, via le terminal nomade, un certificat de contrôle.

De préférence, selon l'invention, le terminal nomade est tel que, lorsque la base locale est connectée au terminal nomade via la liaison informatique, des quatrièmes moyens d'authentification, situés dans la base locale, permettent à la base locale d'authentifier le terminal nomade. Le terminal nomade selon l'invention comprend en outre des moyens inhibiteurs pour inhiber l'authentification du terminal nomade par la base locale en cas d'attaque physique ou logique du terminal nomade.

### Mode 2

Selon un second mode de réalisation de l'invention, de préférence le terminal nomade comprend des seconds moyens d'authentification de la carte à microprocesseur. Les seconds moyens d'authentification procèdent aux opérations d'authentification lorsque la carte à microprocesseur est accouplée au terminal.

Le terminal nomade est tel que, lorsque la base locale est connectée au terminal nomade via la liaison informatique, des quatrièmes moyens d'authentification situés dans la base locale, permettent à la base locale d'authentifier le terminal nomade. Le terminal nomade selon l'invention comprend en outre des moyens inhibiteurs pour inhiber l'authentification du terminal nomade par la base locale en cas d'attaque physique ou logique du terminal nomade.

De préférence, selon l'invention, le terminal nomade est tel que les seconds moyens d'authentification mettent en oeuvre un processus d'échange de données entre la carte à microprocesseur et le terminal nomade.

De préférence, selon l'invention, le terminal nomade est tel que, lorsque la carte à microprocesseur est accouplée au terminal nomade, des troisièmes moyens d'authentification coopèrent avec la carte à microprocesseur pour authentifier l'utilisateur.

De préférence, selon l'invention, le terminal nomade comporte un organe de commande permettant à l'utilisateur d'entrer un code confidentiel dans le terminal nomade et de transmettre le code confidentiel à la carte à microprocesseur. La carte à microprocesseur comporte un comparateur permettant de contrôler le code confidentiel. La carte à microprocesseur comporte en outre des moyens d'émission émettant, à destination du terminal nomade, un certificat de contrôle.

### Mode 1 et Mode 2

Quelque soit le mode de réalisation du terminal nomade selon l'invention, de préférence le terminal nomade comporte une zone mémoire dans laquelle est enregistrée au moins une partie des données transmises et/ou reçues, notamment celles relatives à l'opération.

Il résulte de la combinaison des traits techniques qu'il est possible d'enregistrer, dans le terminal, des données, qui peuvent être :
- antérieures à la réalisation d'une transaction ; par exemple les données qui figurent sur un ticket d'entrée d'un système de péage autoroutier fermé, ce qui permet la dématérialisation de ce ticket ;
- concomitantes à la réalisation d'une transaction ; par exemple les données qui figurent sur le ticket matérialisant la réalisation d'une transaction par carte de paiement ;
- consécutives à la réalisation d'une transaction d'achat ; par exemple les données qui figurent sur un titre de transport ou d'un billet donnant accès à un spectacle..., ce qui permet la dématérialisation de ce titre de transport ou de ce billet en l'enregistrant dans le terminal nomade sous forme de certificat électronique.

De préférence, selon l'invention, le terminal nomade comporte des moyens de lecture actionnables par l'utilisateur permettant de lire des données confidentielles contenues dans la zone mémoire du terminal nomade après authentification de l'utilisateur au moyen de la carte à microprocesseur.

Il résulte de la combinaison des traits techniques qu'il est possible de transférer, après authentification de l'utilisateur si nécessaire, les données du terminal vers un équipement informatique personnel, par exemple un PC ou un assistant personnel, pour traitement au moyen d'un logiciel idoine, par exemple un logiciel de comptabilité personnelle, des données relatives aux opérations effectuées avec la carte.

De préférence, selon l'invention, le terminal nomade comporte :
- des moyens de calcul couplés à une horloge et à dispositif de localisation notamment du type GPS pour calculer la date, l'heure et les coordonnées géographiques de l'opération,
- des moyens d'enregistrement pour enregistrer dans une zone mémoire protégée du terminal nomade, la date, l'heure et les coordonnées géographiques de l'opération.

Il résulte de la combinaison des traits techniques qu'il est possible d'horodater une opération et de situer géographiquement le lieu où elle a été réalisée. Il est ainsi possible de s'assurer que l'horloge du terminal d'un commerçant n'est pas décalée de façon trop importante par rapport à la réalité. D'autres applications sont envisageables : pointage en cas de chômage, vote électronique, contrôle des assignations à résidence, enchères électroniques, date, heure et lieu d'acceptation d'une offre contractuelle...

De préférence, selon l'invention, le terminal nomade comporte des moyens de calcul :
- enrichissant les données avec de nouvelles données, notamment la date, l'heure, les coordonnées géographiques, un historique d'opérations, des certificats,
- certifiant tout ou partie des données et/ou des nouvelles données.

### Description détaillée

D'autres caractéristiques et avantages de l'invention apparaîtront à la lecture de la description d'une variante de réalisation de l'invention donnée à titre d'exemple indicatif et non limitatif, et de la
- figure 1, qui représente le schéma général du terminal,
- figure 2, qui représente l'authentification de la base locale 7 par le terminal nomade 3 dans les modes 1 et 2, premiers moyens d'authentification 18,
- figure 3, qui représente l'authentification de la carte 5 par la base locale dans le mode 1, seconds moyens d'authentification 20,
- figure 4, qui représente le contrôle du code confidentiel 14 dans le mode 1, troisièmes moyens d'authentification 21,
- figure 5, qui représente l'authentification du terminal nomade 3 par la base locale 7 dans les modes 1 et 2, quatrièmes moyens d'authentification 26
- figure 6, qui représente l'authentification de la carte 5 dans le mode 2, seconds moyens d'authentification 20,
- figure 7, qui représente le contrôle du code confidentiel 14 dans le mode 2, troisièmes moyens d'authentification 21,
- figure 8, qui représente l'enregistrement et la lecture dans le terminal de données 11,
- figure 9, qui représente l'utilisation des moyens d'enregistrement de la date, l'heure et des coordonnées géographiques de l'opération.

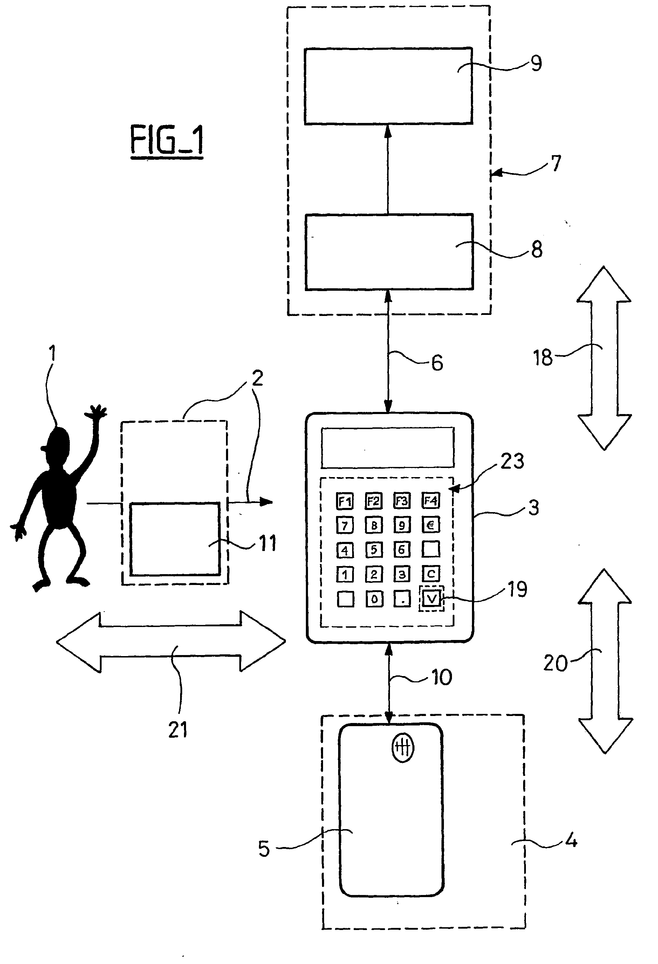

On va maintenant décrire l'invention en se référant à la figure 1. Le système représenté sur la figure 1 permet d'authentifier, au sens de la présente invention, des données 11 transmises et/ou reçues par un utilisateur 1 et relatives à une opération 2, notamment des données 11 relatives à l'acquisition de biens ou de services ou à des opérations de retrait d'espèces. Le système représenté sur la figure 1 comprend au moins un objet nomade 4 se présentant sous la forme d'une carte à microprocesseur 5.

La carte à microprocesseur contient des données secrètes ou privées, notamment des clés, susceptibles de réaliser des opérations cryptographiques capables de :
- authentifier un élément externe à la carte,
- se faire authentifier par un élément externe,
- authentifier un porteur, par exemple en contrôlant un code confidentiel,
- produire un certificat, attestant la réalité d'une opération.

L'objet nomade 4 peut se présenter sous la forme d'une carte à microprocesseur ou sous une toute autre forme, par exemple une montre, une bague...

Le système comprend également au moins un terminal nomade 3 susceptible d'être accouplé à un objet nomade 4 via une liaison informatique 10. On verra ci-après que le terminal nomade 3 peut être réalisé de différentes façons.

Le système comprend également une base locale 7 pouvant se présenter sous la forme d'un équipement informatique local 8 ou d'un équipement informatique local 8 connectable à un serveur distant 9. Dans ce dernier cas la liaison entre l'équipement informatique local 8 et le serveur distant 9 peut être notamment du type liaison téléphonique par réseau commuté, par ligne spécialisée, par liaison haut débit, par liaison GSM, par liaison radio, par câble de réseau TV, par fibre optique...

Le terminal nomade 3 est connecté à la base locale 7 via une liaison informatique 6 à courte distance allant de quelques centimètres à quelques dizaines de mètres, notamment une liaison du type « sans fil », par exemple liaison Bluetooth, liaison infrarouge, liaison hyperfréquence ou toute autre liaison sans contact. La liaison informatique 6 est autonome, privée et spécifique au terminal nomade et à la base locale. Cette liaison informatique 6 n'utilise aucun réseau de téléphonie fixe ou mobile. Ainsi, la liaison entre le terminal nomade et la base locale est réalisée de façon simple, rapide et économique pour l'utilisateur, sans connexion filaire à établir et sans aucun coût de communication dû à un opérateur de télécommunication.

Le terminal nomade 3 est connecté à l'objet nomade 4 via une liaison informatique 10. Si l'objet nomade 4 est une carte à microprocesseur 5, cette liaison peut être du type classique « à contacts », en insérant la carte dans le terminal nomade. Elle peut être également de type « sans contacts ».

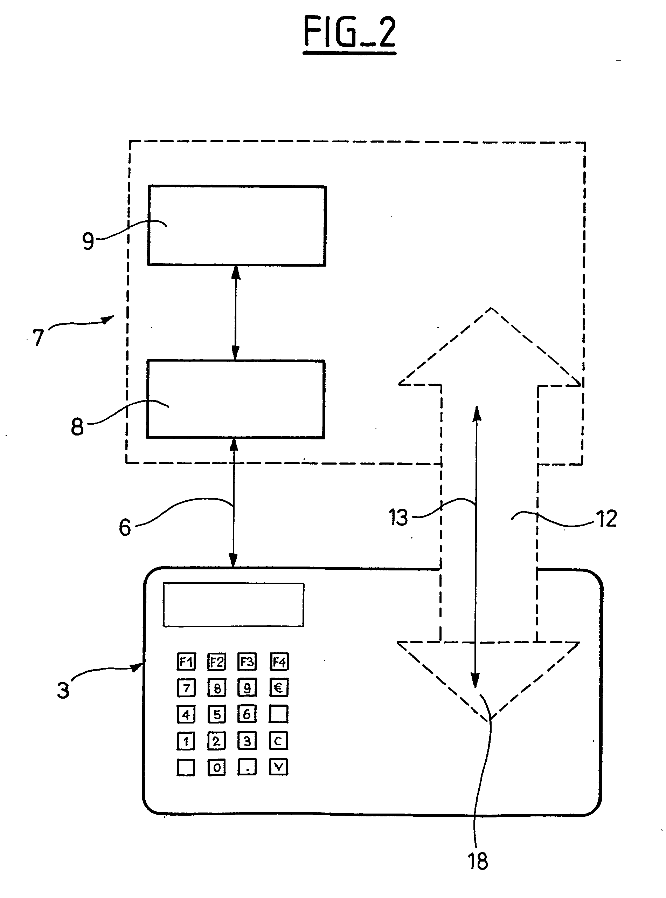

Le terminal nomade 3 comprend des premiers moyens d'authentification 18 de la base locale 7 lorsqu'elle est connectée au terminal nomade 3 via la liaison informatique 6, ci-dessus décrite. Ces premiers moyens d'authentification 18 sont réalisés de la manière suivante dans l'exemple décrit en se référant à la figure 2. Les premiers moyens d'authentification 18 de la base locale 7 sont situés dans le terminal nomade 3. Ils procèdent aux opérations d'authentification lorsque la base locale 7 est en communication avec le terminal nomade 3 via la liaison informatique 6, ci-dessus décrite.

Selon le cas, les premiers moyens d'authentification 18 authentifient :
- soit l'équipement informatique local 8 si celui-ci est sous le contrôle du commerçant, par exemple automate,
- soit le serveur distant 9 si l'équipement informatique local est sous le contrôle du porteur, par exemple PC.

Le terminal nomade 3 demande à la base locale 7, équipement informatique local 8 ou serveur distant 9, selon le cas, de réaliser un calcul cryptographique mettant en oeuvre une clé privée contenue dans la base locale et de lui transmettre le résultat. Ce calcul comporte un élément aléatoire permettant d'éviter de reproduire le processus d'authentification. Le terminal nomade 3 contrôle le résultat qui lui a été transmis dans les données 13. Le processus est réalisé de façon asymétrique, c'est-à-dire qu'il n'est pas nécessaire que le terminal nomade 3 et la base locale 7 partagent un même secret.

Le terminal nomade 3 comprend des moyens de validation 19 actionnables par l'utilisateur 1 pour valider les données 11. On rappelle qu'au sens de la présente invention on entend par valider :
- soit une validation simple par appui sur une touche de validation 19 du terminal nomade, par exemple pour une opération de paiement par porte-monnaie électronique,
- soit une validation avec authentification du porteur par frappe sur l'organe de commande 23 du terminal nomade d'un code confidentiel puis appui sur une touche de validation, par exemple paiement au moyen d'une carte de débit/crédit.

Le système comprend en outre des seconds moyens d'authentification 20 pour authentifier la carte à microprocesseur 5. Ces seconds moyens d'authentification 20 sont réalisés de manière différente suivant le mode 1 ou 2.

Le système comprend en outre des troisièmes moyens d'authentification 21 pour authentifier l'utilisateur 1. Ces troisièmes moyens d'authentification 21 sont réalisés de manière différente suivant le mode 1 ou 2.

### Mode 1

Dans le mode de réalisation représenté sur la figure 2, les seconds moyens d'authentification 20 de la carte à microprocesseur 5 sont situés dans la base locale 7. Les seconds moyens d'authentification 20 procèdent aux opérations d'authentification lorsque la carte à microprocesseur 5 est accouplée au terminal nomade 3 et lorsque le terminal nomade 3 est connecté à la base locale 7 via la liaison informatique 6, ci-dessus décrite.

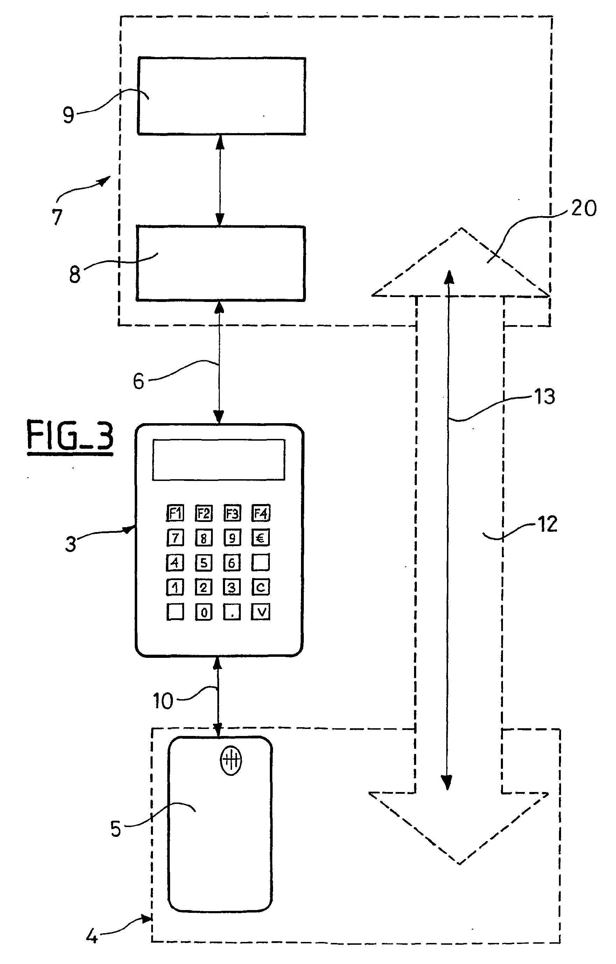

Les seconds moyens d'authentification 20 mettent en oeuvre un processus d'échange de données 12 entre la carte à microprocesseur 5 et la base locale 7. Ce processus d'échange de données 12 est réalisé de la manière suivante, dans la variante représentée sur la figure 3.

Les seconds moyens d'authentification 20 sont situés dans l'équipement informatique local 8 ou dans le serveur distant 9, selon le cas. L'équipement hébergeant les seconds moyens d'authentification demande à l'objet nomade 4 de réaliser un calcul cryptographique mettant en oeuvre une clé privée contenue dans l'objet nomade et de lui transmettre le résultat. Ce calcul comporte un élément aléatoire permettant d'éviter de reproduire le processus d'authentification.

L'équipement hébergeant les seconds moyens d'authentification contrôle le résultat qui lui a été transmis dans les données 13. Le processus est réalisé de façon asymétrique, c'est-à-dire qu'il n'est pas nécessaire que l'équipement hébergeant les seconds moyens d'authentification et l'objet nomade 4 partagent un même secret.

Les données échangées 13 transitent de manière transparente via le terminal nomade 3.

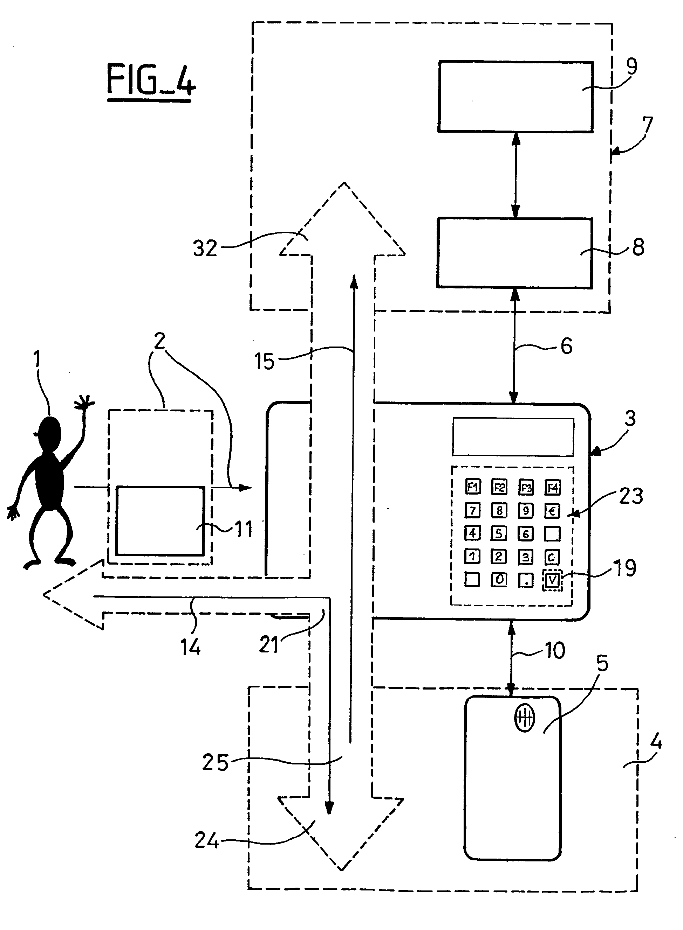

Les troisièmes moyens d'authentification 21 représentés sur la figure 4 coopèrent avec la carte à microprocesseur 5 et avec la base locale 7 pour authentifier l'utilisateur 1, vis-à-vis de la base locale 7, lorsque la carte à microprocesseur 5 est accouplée au terminal nomade 3. Les troisièmes moyens d'authentification 21 comportent dans l'exemple décrit un organe de commande 23.

Cet organe de commande 23, situé dans le terminal nomade 3, est composé d'un clavier sur lequel l'utilisateur tape son code confidentiel 14 et d'une touche de validation 19. Un écran, sur lequel la frappe de chaque caractère du code confidentiel est matérialisée par l'apparition d'une étoile, permet à l'utilisateur de savoir où il en est de la frappe de son code confidentiel.

Cet organe de commande 23 permet à l'utilisateur 1 d'entrer un code confidentiel 14 dans le terminal nomade 3 et de transmettre le code à la carte à microprocesseur 5. Si nécessaire, le code confidentiel 14 est chiffré par le terminal nomade 3 avant transmission à la carte à microprocesseur 5.

Les troisièmes moyens d'authentification 21 comprennent également dans l'exemple décrit un comparateur 24 situé dans la carte à microprocesseur 5.

Le comparateur 24 compare, après déchiffrement si nécessaire, le code confidentiel 14 entré par l'utilisateur à une valeur de référence contenue dans la carte à microprocesseur 5.

Les troisièmes moyens d'authentification 21 comprennent également dans l'exemple décrit des moyens d'émission 25 situés dans la carte à microprocesseur 5. Les moyens d'émission 25 produisent un certificat de contrôle 15 attestant que le code confidentiel a été contrôlé et qu'il était correct. Ce certificat est produit en utilisant des techniques de cryptographie asymétrique pour éviter une obligation de partage de secrets entre la carte à microprocesseur et la base locale. Les moyens d'émission 25 émettent, à destination de la base locale 7, via le terminal nomade 3, le certificat de contrôle 15. La base locale 7, équipement informatique local 8 ou serveur distant 9, selon le cas, possède un dispositif de contrôle 32 du certificat 15 avant de poursuivre la transaction.

Les troisièmes moyens d'authentification 21 de l'utilisateur pourraient être réalisés en mettant en oeuvre des techniques de contrôle s'appuyant sur des mesures biométriques.

L'utilisateur transporte avec lui son propre dispositif de contrôle biométrique. Chaque émetteur de carte à microprocesseur peut donc choisir sa propre méthode de mesures biométriques, indépendamment des autres émetteurs, pourvu que les terminaux nomades qu'il distribue soient équipés du dispositif de contrôle adéquat. Il en résulte une économie globale importante puisqu'il devient inutile d'équiper l'ensemble des points d'acceptation fixes en autant de systèmes de contrôle biométriques qu'il existe de méthodes de mesures. De plus, les données biométriques de référence, propres aux porteurs, ne sont pas stockées dans des bases de données centrales. Elles sont en permanence sous le contrôle des porteurs utilisant le terminal nomade 3.

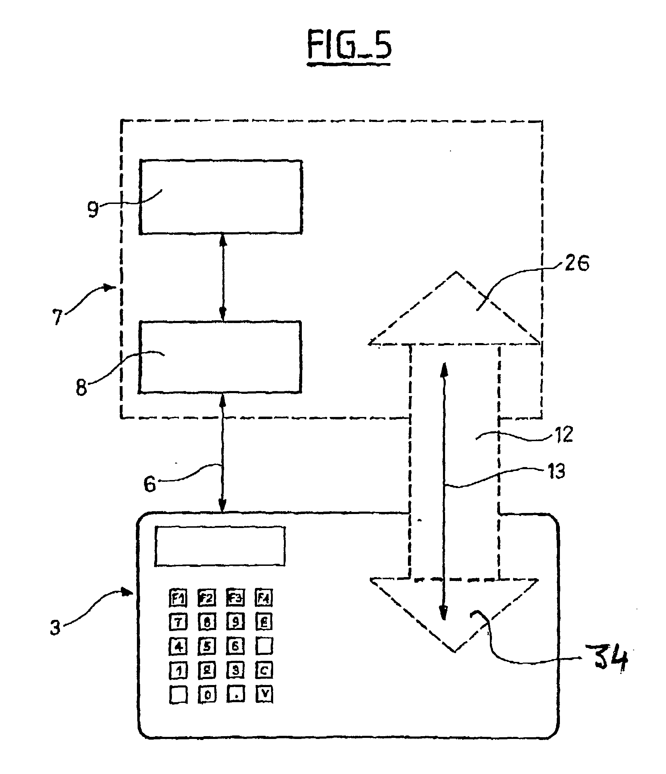

Le système comprend en outre des quatrièmes moyens d'authentification 26, situés dans la base locale 7. Les quatrièmes moyens d'authentification 26 et les moyens inhibiteurs 34 sont réalisés de la même manière pour le mode 1 et le mode 2. Ils sont représentés sur la figure 5.

Les quatrièmes moyens d'authentification 26 sont situés :
- dans l'équipement informatique local 8 si celui-ci est sous le contrôle du commerçant, par exemple automate ;
- dans le serveur distant 9 si l'équipement informatique local est sous le contrôle du porteur, par exemple PC.

Les quatrièmes moyens d'authentification 26 permettent d'authentifier le terminal nomade 3 en procédant aux opérations d'authentification lorsque la base locale 7 est en communication avec le terminal nomade 3 via la liaison informatique 6, ci-dessus décrite.

La base locale 7 demande au terminal nomade 3 de réaliser un calcul cryptographique mettant en oeuvre une clé privée contenue dans le terminal et de lui transmettre le résultat. Ce calcul comporte un élément aléatoire permettant d'éviter de reproduire le processus d'authentification. Le terminal nomade 3 contrôle le résultat qui lui a été transmis dans les données 13. Le processus est réalisé de façon asymétrique, c'est-à-dire qu'il n'est pas nécessaire que l'équipement hébergeant les premiers moyens d'authentification et la base locale 7 partagent un même secret.

Les quatrièmes moyens d'authentification 26 permettent à la base locale 7 d'authentifier le terminal nomade 3 lorsque celui-ci est connecté à la base locale 7 via la liaison informatique 6, ci-dessus décrite.

Le terminal nomade est réactif aux attaques physiques ou logiques, il est de type « tamper responsive », c'est à dire qu'en cas de tentative de forçage du boîtier ou de tentative de modification de ses caractéristiques physiques, il détruit ou efface les données cryptographiques secrètes ou privées qu'il contient. A cet effet, le terminal nomade comporte des moyens inhibiteurs 34 qui effacent les données cryptographiques secrètes ou privées de façon à empêcher la mise en oeuvre des quatrièmes moyens d'authentification 26.

### Mode 2

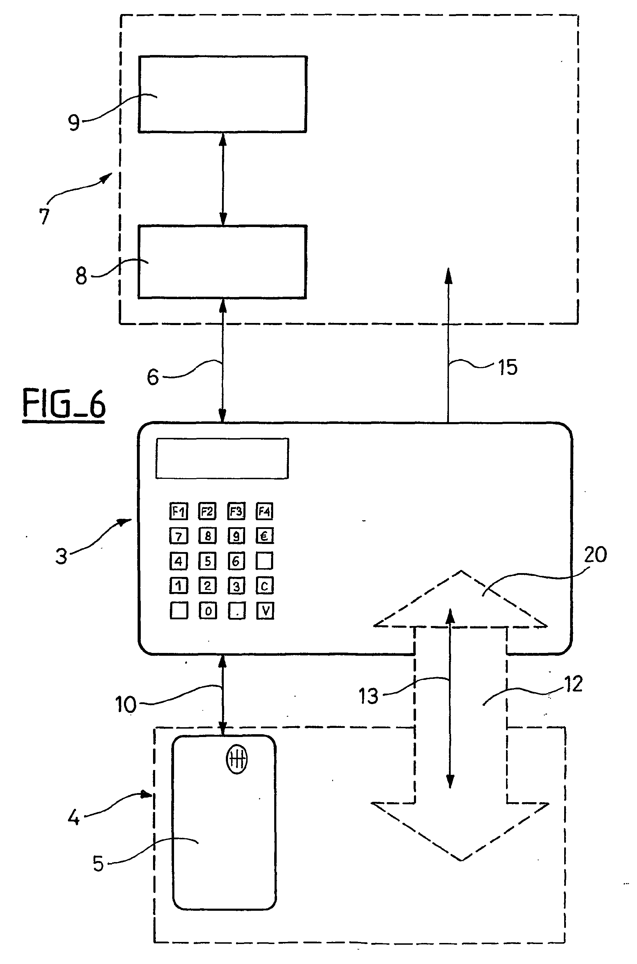

Dans le mode de réalisation représenté sur la figure 6, les seconds moyens d'authentification 20 de la carte à microprocesseur 5 sont situés dans le terminal nomade 3. Les seconds moyens d'authentification 20 procèdent aux opérations d'authentification lorsque la carte à microprocesseur 5 est accouplée au terminal. Les seconds moyens d'authentification 20 mettent en oeuvre un processus d'échange de données 12 entre la carte à microprocesseur 5 et le terminal nomade 3.

Les opérations d'authentification sont réalisées de la manière suivante. Le terminal nomade 3 demande à l'objet nomade 4 de réaliser un calcul cryptographique mettant en oeuvre une clé secrète contenue dans l'objet nomade et de lui transmettre le résultat. Ce calcul comporte un élément aléatoire permettant d'éviter de reproduire le processus d'authentification. Le terminal nomade 3 contrôle le résultat qui lui a été transmis dans les données 13. Le processus est réalisé de façon symétrique, c'est-à-dire que le terminal nomade 3 et l'objet nomade 4 partagent un même secret.

De plus, le terminal nomade 3 produit un certificat 15 attestant que l'authentification de l'objet nomade a été réalisé avec succès. Ce certificat est produit en utilisant des techniques de cryptographie asymétrique pour éviter une obligation de partage de secrets entre le terminal nomade 3 et la base locale 7. La base locale 7, équipement informatique local 8 ou serveur distant 9, selon le cas, possède un dispositif de contrôle 32 du certificat 15 avant de poursuivre la transaction.

Le système comprend en outre des quatrièmes moyens d'authentification 26 situés dans la base locale 7. Les quatrièmes moyens d'authentification 26 sont réalisés de la manière que pour le mode 1. Ils sont représentés sur la figure 5. Les quatrièmes moyens d'authentification 26 permettent à la base locale 7 d'authentifier le terminal nomade 3 lorsque celui-ci est connecté à la base locale 7 via la liaison informatique 6, ci-dessus décrite.

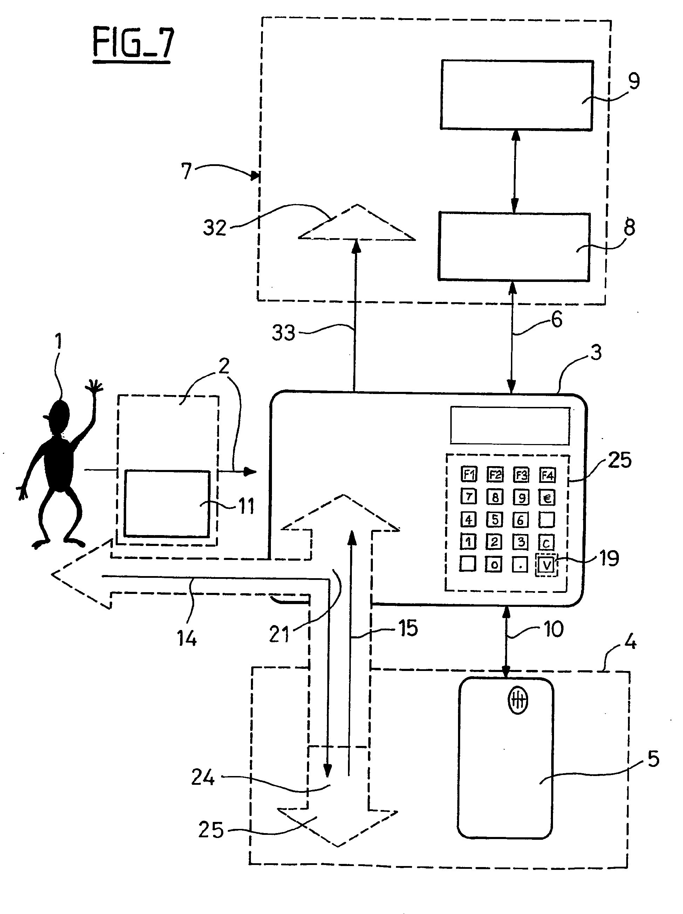

Les troisièmes moyens d'authentification 21, figurent 7, coopèrent avec la carte à microprocesseur 5 pour authentifier l'utilisateur 1 lorsque la carte à microprocesseur 5 est accouplée au terminal nomade 3. Les troisièmes moyens d'authentification 21 comportent, dans l'exemple décrit sur la figure 7, un organe de commande 23.

L'organe de commande 23 est situé dans le terminal nomade 3. Il peut être réalisé comme cela est décrit en se référant à la figure 7. L'organe de commande 23 est composé d'un clavier sur lequel l'utilisateur tape son code confidentiel 14 et d'une touche de validation 19.

Un écran, sur lequel la frappe de chaque caractère du code confidentiel est matérialisée par l'apparition d'une étoile, permet à l'utilisateur de savoir où il en est de la frappe de son code confidentiel. Il permet de transmettre le code confidentiel 14 à la carte à microprocesseur 5. Si nécessaire, le code confidentiel 14 est chiffré par le terminal nomade 3 avant transmission à la carte à microprocesseur 5. L'organe de commande 23 permet à l'utilisateur 1 d'entrer un code confidentiel 14 dans le terminal nomade 3 et de transmettre le code à la carte à microprocesseur 5.

Les troisièmes moyens d'authentification 21 comportent également un comparateur 24 situé dans la carte à microprocesseur 5. Le comparateur 24 peut être réalisé ainsi que cela a été décrit ci-dessus. Le comparateur 24 permet de contrôler le code confidentiel 14, après déchiffrement si nécessaire.

Les troisièmes moyens d'authentification 21 comportent également des moyens d'émission 25 situés dans la carte à microprocesseur 5. Les moyens d'émission 25 émettent, à la demande du terminal nomade 3 et vers celui-ci un certificat de contrôle 15. Le certificat de contrôle 15 est réalisé en effectuant un calcul cryptographique dynamique portant sur la vérification du code confidentiel effectuée par le comparateur 24. Ce calcul met en oeuvre une clé secrète que possède la carte. Le certificat de contrôle 15 atteste que le code confidentiel est correct. Le terminal nomade 3 contrôle le certificat de contrôle 15.

Le terminal nomade 3, émet à son tour, à destination de la base locale 7, un nouveau certificat de contrôle 33 en procédant à un nouveau calcul cryptographique asymétrique. La base locale 7, l'équipement informatique local 8 ou le serveur distant 9, selon le cas, procède, au moyen d'un dispositif de contrôle 32, au contrôle du certificat 33, avant de poursuivre la transaction.

La mise en oeuvre d'un processus de calcul cryptographique asymétrique permet d'éviter de partager des secrets entre la carte à microprocesseur 5 et la base locale 7.

Le fait que le terminal nomade 3 soit placé sous l'autorité de l'émetteur de la carte à microprocesseur 5 permet le partage de secrets, sans risque de fraude, entre le terminal nomade 3 et la carte à microprocesseur 5.

Dans le cas des variantes de réalisation des modes 1 ou 2 décrits en se référant aux figures 1 à 7, le terminal nomade 3 comporte en outre une zone mémoire 16 dans laquelle est enregistrée au moins une partie des données 11 transmises et/ou reçues, notamment celles relatives à l'opération 2.

Il est donc possible d'enregistrer, dans le terminal nomade, des données, qui peuvent être :
- soit antérieures à la réalisation d'une transaction ; par exemple les données qui figurent sur un ticket d'entrée d'un système de péage autoroutier fermé, ce qui permet la dématérialisation de ce ticket,
- soit concomitantes à la réalisation d'une transaction ; par exemple les données qui figurent sur le ticket matérialisant la réalisation d'une transaction par carte de paiement,
- soit consécutives à la réalisation d'une transaction d'achat ; par exemple les données qui figurent sur un titre de transport ou d'un billet donnant accès à un spectacle..., ce qui permet la dématérialisation de ce titre de transport ou de ce billet en l'enregistrant dans le terminal nomade sous forme de certificat électronique,
- soit des données financières liées à un porte monnaie électronique fonctionnant en mode hors ligne, transfert sécurisé de monnaie électronique d'un porte monnaie à un autre,
- soit des données dérivées de la transaction et permettant de gérer des applications de fidélité,
- soit des données relatives à un vote électronique, par exemple assemblées générales d'actionnaires.

Dans le cas des modes de réalisation décrits en se référant aux figures 2 et 3, le terminal nomade 3 comporte en outre des moyens de lecture 27 actionnables par l'utilisateur 1. Les moyens de lecture 27 permettent de lire les données enregistrées dans la zone mémoire 16 du terminal nomade 3. Il est ainsi possible de consulter les données de la zone mémoire 16, après authentification si nécessaire de l'utilisateur, en faisant frapper si nécessaire le code confidentiel 14 qui est contrôlé par la carte à microprocesseur 5.

La consultation est effectuée :
- soit en entrant les commandes au moyen du clavier du terminal nomade 3 et en lisant les données sur l'écran du terminal nomade,
- soit en entrant une commande au moyen du clavier du terminal nomade 3, commande qui a pour effet de transférer les données vers un équipement informatique personnel 22, par exemple un PC ou un assistant personnel. Il est alors possible de traiter ces données au moyen d'un logiciel idoine, par exemple un logiciel de comptabilité personnelle.

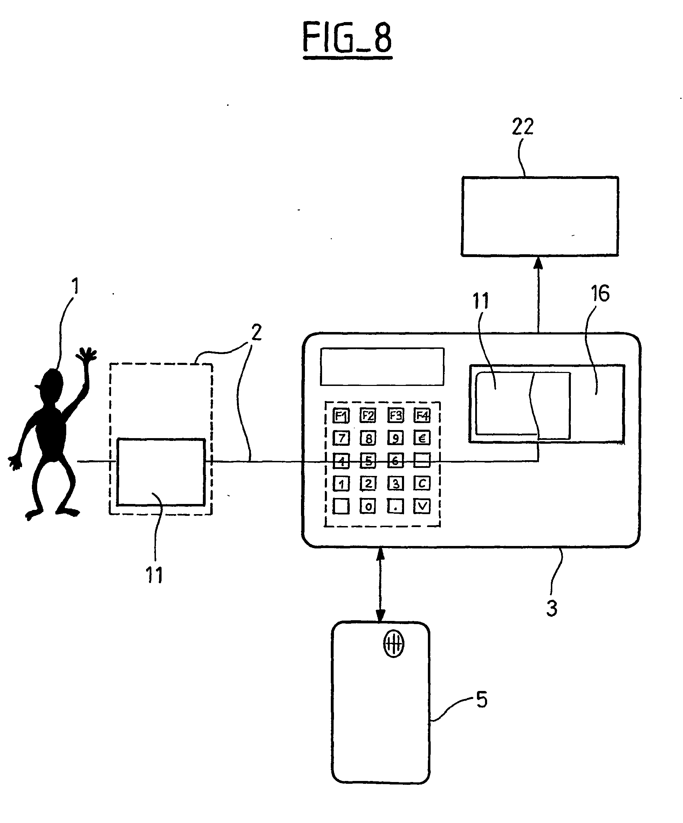

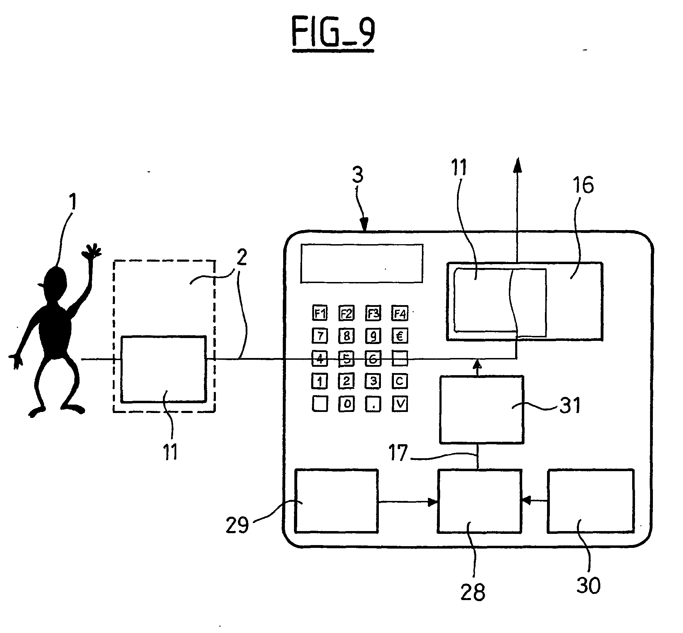

Dans le cas des variantes de réalisation des modes 1 ou 2 décrits en se référant aux figures 1 à 8 et plus particulièrement à la figure 9 le terminal nomade 3 comporte des moyens de calcul 28 couplés à une horloge 29 et à dispositif de localisation 30 pour calculer la date, l'heure et les coordonnées géographiques de l'opération 2. Le dispositif de localisation 30 déduit des données transmises par la base locale 7 la position de celle-ci et par conséquent la sienne puisqu'il est situé à courte distance de la base locale. Le dispositif de localisation 30 peut également être associé à un système de type GPS ou être constitué par un tel système. Il est ainsi possible de contrôler si la base locale est située à l'endroit où elle prétend être.

Le terminal nomade 3 comporte en outre des moyens d'enregistrement 31 pour enregistrer dans une zone mémoire 16 protégée du terminal nomade 3, la date, l'heure et les coordonnées géographiques de ladite opération 2. Les moyens d'enregistrement 31 sont réalisés de telle sorte qu'il est possible d'horodater une opération et de situer géographiquement le lieu où elle a été réalisée. Il est ainsi possible de s'assurer que l'horloge du terminal d'un commerçant n'est pas décalée de façon trop importante par rapport à la réalité. D'autres applications sont envisageables : pointage en cas de chômage, vote électronique, contrôle des assignations à résidence, enchères électroniques, date, heure et lieu d'acceptation d'une offre contractuelle...

Les moyens de calcul 28 permettent d'enrichir les données 11 avec de nouvelles données 17, notamment la date, l'heure, les coordonnées géographiques, un historique d'opérations, des certificats.

Les moyens de calcul 28 permettent également de certifier tout ou partie desdites données 11 et/ou desdites nouvelles données 17. Pour certifier tout ou partie desdites données 11 et/ou desdites nouvelles données 17 les moyens de calcul situés dans le terminal nomade 3 produisent un certificat qui atteste de la date, de l'heure et du lieu de réalisation d'une transaction.

## Revendications

1. Procédé permettant d'authentifier des données (11) transmises et/ou reçues par un utilisateur (1) et relatives à une opération (2), notamment des données (11) relatives à l'acquisition de biens ou de services ou à des opérations de retrait d'espèces ; ledit utilisateur (1) disposant d'un terminal nomade (3), et d'un objet nomade (4) se présentant sous la forme d'une carte à microprocesseur (5) susceptible d'être accouplée audit terminal nomade (3) ;
ledit procédé comprenant :
- l'étape d'établir une liaison informatique (6) à courte distance entre ledit terminal nomade (3) et une base locale (7) ; ladite base locale (7) pouvant se présenter sous la forme d'un équipement informatique local (8) ou d'un équipement informatique local (8) connectable à un serveur distant (9) ; ladite liaison informatique (6) n'utilisant aucun réseau de téléphonie fixe ou mobile ;
- l'étape, au niveau du terminal nomade (3), d'authentifier ladite base locale (7) lorsque celle-ci est connectée audit terminal nomade (3) via ladite liaison informatique (6),
- l'étape, au niveau de la base locale (7), d'authentifier ledit terminal nomade (3) lorsque celui est connecté à la base locale (7) via la liaison informatique (6),
- l'étape d'authentifier ladite carte à microprocesseur (5),
- l'étape, pour l'utilisateur (1), de valider, au sens de la présente invention, lesdites données (11) à l'aide du terminal nomade,
- l'étape, pour l'utilisateur (1), de s'authentifier.

2. Procédé selon la revendication 1 ; ledit procédé étant tel que l'authentification de ladite carte à microprocesseur (5) est effectuée au niveau de ladite base locale (7) lorsque ladite carte à microprocesseur (5) est accouplée audit terminal nomade (3) et lorsque ledit terminal nomade (3) est connecté à ladite base locale (7) via ladite liaison informatique (6) ; ladite authentification mettant en oeuvre un processus d'échange de données (12) entre ladite carte à microprocesseur (5) et ladite base locale (7) ; lesdites données échangées (13) transitant de manière transparente via ledit terminal nomade (3).

3. Procédé selon la revendication 2 ; ledit procédé étant tel que l'utilisateur (1) s'authentifie, vis-à-vis de ladite base locale (7), avec ledit terminal nomade (3), au moyen de ladite carte à microprocesseur (5) lorsque ladite carte à microprocesseur (5) est accouplée audit terminal nomade (3).

4. Procédé selon la revendication 3 ; ledit procédé étant tel que, pour s'authentifier vis-à-vis de ladite base locale (7),
- l'utilisateur (1) entre un code confidentiel (14) dans ledit terminal nomade (3),
- ledit code confidentiel (14) est contrôlé par ladite carte à microprocesseur (5),
- ladite carte à microprocesseur (5) émet un certificat de contrôle (15), destiné à être transmis à ladite base locale (7) via le terminal nomade (3).

5. Procédé selon l'une quelconque des revendications 2 à 4 ; ledit procédé comprenant en outre l'étape d'inhiber ladite authentification dudit terminal nomade (3) par ladite base locale (7) en cas d'attaque physique ou logique dudit terminal nomade (3).

6. Procédé selon la revendication 1 ; ledit procédé étant tel que l'authentification de ladite carte à microprocesseur (5) est effectuée au niveau dudit terminal nomade (3) lorsque ladite carte à microprocesseur (5) est accouplée audit terminal nomade (3) ; ledit procédé comprenant en outre l'étape d'inhiber ladite authentification dudit terminal nomade (3) par ladite base locale (7) en cas d'attaque physique ou logique dudit terminal nomade (3).

7. Procédé selon la revendication 6 ; ledit procédé étant tel que ladite authentification de ladite carte à microprocesseur (5) met en oeuvre un processus d'échange de données (12) entre ladite carte à microprocesseur (5) et ledit terminal nomade (3).

8. Procédé selon l'une quelconque des revendications 6 ou 7; ledit procédé étant tel que l'utilisateur (1) s'authentifie, vis-à-vis dudit terminal, au moyen de ladite carte à microprocesseur (5) lorsque ladite carte à microprocesseur (5) est accouplée audit terminal nomade (3).

9. Procédé selon la revendication 8 ; ledit procédé étant tel que pour s'authentifier vis-à-vis dudit terminal nomade (3),
- l'utilisateur (1) entre un code confidentiel (14) dans ledit terminal nomade (3),
- ledit code confidentiel (14) est contrôlé par ladite carte à microprocesseur (5),
- ladite carte à microprocesseur (5) émet un certificat de contrôle (15), destiné à être transmis audit terminal nomade (3).

10. Procédé selon l'une quelconque des revendications 1 à 9 ; ledit procédé étant tel qu'il comprend en outre l'étape d'enregistrer dans une zone mémoire (16) du terminal nomade (3) au moins une partie desdites données (11) transmises et/ou reçues, notamment celles relatives à ladite opération (2).

11. Procédé selon la revendication 10 ; ledit procédé étant tel qu'il comprend en outre l'étape, pour l'utilisateur (1), de lire des données (11) confidentielles contenues dans ladite zone mémoire (16) dudit terminal nomade (3) après authentification dudit utilisateur (1) au moyen de ladite carte à microprocesseur (5).

12. Procédé selon l'une quelconque des revendications 1 à 11 ; ledit procédé étant tel qu'il comprend en outre :
- l'étape de déterminer la date, l'heure et les coordonnées géographiques de ladite opération (2),
- l'étape d'enregistrer dans une zone mémoire (16) protégée du terminal nomade (3), la date, l'heure et les coordonnées géographiques de ladite opération (2).

13. Procédé selon l'une quelconque des revendications 1 à 12 ; ledit procédé comprenant en outre :
- l'étape, pour ledit terminal d'enrichir lesdites données (11) avec de nouvelles données (17), notamment la date, l'heure, les coordonnées géographiques, un historique d'opérations, des certificats,
- l'étape, pour ledit terminal, de certifier tout ou partie desdites données (11) et/ou desdites nouvelles données (17).

14. Système permettant d'authentifier des données (11) transmises et/ou reçues par un utilisateur (1) et relatives à une opération (2), notamment des données (11) relatives à l'acquisition de biens ou de services ou à des opérations de retrait d'espèces ;
ledit système comprenant :
- au moins un objet nomade (4) se présentant sous la forme d'une carte à microprocesseur (5),
- au moins un terminal nomade (3) susceptible d'être accouplé audit objet nomade (4),
- une base locale (7) pouvant se présenter sous la forme d'un équipement informatique local (8) ou d'un équipement informatique local (8) connectable à un serveur distant (9),
- une liaison informatique (6) à courte distance entre ledit terminal nomade (3) et ladite base locale (7) ; ladite liaison informatique (6) n'utilisant aucun réseau de téléphonie fixe ou mobile ;
ledit terminal nomade (3) comprenant :
- des premiers moyens d'authentification (18) de ladite base locale (7) lorsqu'elle est connectée audit terminal nomade (3) via ladite liaison informatique (6),
- des moyens de validation (19) actionnables par l'utilisateur (1) pour valider, au sens de la présente invention, lesdites données (11) ;
ledit système comprenant en outre :
- des seconds moyens d'authentification (20) pour authentifier ladite carte à microprocesseur (5) ;
- des troisièmes moyens d'authentification (21) pour authentifier l'utilisateur (1),
- des quatrièmes moyens d'authentification (26), situés dans ladite base locale (7), permettant à ladite base locale (7) d'authentifier ledit terminal (3) lorsque celui est connecté à ladite base locale (7) via ladite liaison informatique (6).

15. Système selon la revendication 14 ; ledit système étant tel que lesdits seconds moyens d'authentification (20) de ladite carte à microprocesseur (5) sont situés dans ladite base locale (7) et procèdent aux opérations d'authentification lorsque ladite carte à microprocesseur (5) est accouplée audit terminal nomade (3) et lorsque ledit terminal nomade (3) est connecté à ladite base locale (7) via ladite liaison informatique (6) ;
lesdits seconds moyens d'authentification (20) mettant en oeuvre un processus d'échange de données (12) entre ladite carte à microprocesseur (5) et ladite base locale (7) ;
lesdites données échangées (13) transitant de manière transparente via ledit terminal nomade (3).

16. Système selon la revendication 15 ; ledit système étant tel que lesdits troisièmes moyens d'authentification (21) coopèrent avec ladite carte à microprocesseur (5) et avec ladite base locale (7) pour authentifier l'utilisateur (1), vis-à-vis de ladite base locale (7), lorsque ladite carte à microprocesseur (5) est accouplée audit terminal nomade (3).

17. Système selon la revendication 16 ; ledit système étant tel que lesdits troisièmes moyens d'authentification (21) comportent :
- un organe de commande (23), situé dans ledit terminal nomade (3), permettant à l'utilisateur (1) d'entrer un code confidentiel (14) dans ledit terminal nomade (3) et de transmettre ledit code à ladite carte à microprocesseur (5),
- un comparateur (24) situé dans ladite carte à microprocesseur (5) permettant de contrôler ledit code confidentiel (14),
- des moyens d'émission (25) situés dans ladite carte à microprocesseur (5) émettant, à destination de ladite base locale (7), via le terminal nomade (3), un certificat de contrôle (15).

18. Système selon l'une quelconque des revendications 15 à 17 comprenant en outre des moyens inhibiteurs (34) pour inhiber ladite authentification dudit terminal nomade (3) par ladite base locale (7) en cas d'attaque physique ou logique dudit terminal nomade (3).

19. Système selon la revendication 14 ; ledit système étant tel que lesdits seconds moyens d'authentification (20) de ladite carte à microprocesseur (5) sont situés dans ledit terminal nomade (3) et procèdent aux opérations d'authentification lorsque ladite carte à microprocesseur (5) est accouplée audit terminal ; ledit système comprenant en outre des moyens inhibiteurs (34) pour inhiber ladite authentification dudit terminal nomade (3) par ladite base locale (7) en cas d'attaque physique ou logique dudit terminal nomade (3).

20. Système selon la revendication 19 ; ledit système étant tel que lesdits seconds moyens d'authentification (20) mettent en oeuvre un processus d'échange de données (12) entre ladite carte à microprocesseur (5) et ledit terminal nomade (3).

21. Système selon la revendication 19 ou 20 ; ledit système étant tel que lesdits troisièmes moyens d'authentification (21) coopèrent avec ladite carte à microprocesseur (5) pour authentifier ledit utilisateur (1) lorsque ladite carte à microprocesseur (5) est accouplée audit terminal nomade (3).

22. Système selon la revendication 21 ; ledit système étant tel que lesdits troisièmes moyens d'authentification (21) comportent :
- un organe de commande (23), situé dans ledit terminal nomade (3), permettant à l'utilisateur (1) d'entrer un code confidentiel (14) dans ledit terminal nomade (3) et de transmettre ledit code à ladite carte à microprocesseur (5),
- un comparateur (24) situé dans ladite carte à microprocesseur (5) permettant de contrôler ledit code confidentiel (14),
- des moyens d'émission (25) situés dans ladite carte à microprocesseur (5) émettant, à destination dudit terminal nomade (3), un certificat de contrôle (15).

23. Système selon l'une quelconque des revendications 14 à 22 ; ledit système étant tel que ledit terminal nomade (3) comporte une zone mémoire (16) dans laquelle est enregistrée au moins une partie desdites données (11) transmises et/ou reçues, notamment celles relatives à ladite opération (2).

24. Système selon la revendication 23 ; ledit système étant tel que ledit terminal nomade (3) comporte des moyens de lecture (27) actionnables par l'utilisateur (1) permettant de lire des données (11) confidentielles contenues dans ladite zone mémoire (16) dudit terminal nomade (3) après authentification dudit utilisateur (1) au moyen de ladite carte à microprocesseur (5).

25. Système selon l'une quelconque des revendications 14 à 24 ; ledit système étant tel que ledit terminal nomade (3) comporte :
- des moyens de calcul (28) couplés à une horloge (29) et à un dispositif de localisation (30) notamment du type GPS pour calculer la date, l'heure et les coordonnées géographiques de ladite opération (2),
- des moyens d'enregistrement (31) pour enregistrer dans une zone mémoire (16) protégée du terminal nomade (3), la date, l'heure et les coordonnées géographiques de ladite opération (2).

26. Système selon l'une quelconque des revendications 14 à 25 ; ledit système étant tel que ledit terminal nomade (3) comporte des moyens de calcul (28) :
- enrichissant lesdites données (11) avec de nouvelles données (17), notamment la date, l'heure, les coordonnées géographiques, un historique d'opérations, des certificats,
- certifiant tout ou partie desdites données (11) et/ou desdites nouvelles données (17).

27. Terminal nomade (3) permettant d'authentifier des données (11) transmises et/ou reçues par un utilisateur (1) et relatives à une opération (2), notamment des données (11) relatives à l'acquisition de biens ou de services ou à des opérations de retrait d'espèces ;
ledit terminal nomade (3) étant susceptible d'être accouplé à un objet nomade (4) se présentant sous la forme d'une carte à microprocesseur (5) ;
ledit terminal nomade (3) étant susceptible d'être connecté, via une liaison informatique (6) à courte distance, à une base locale (7) pouvant se présenter sous la forme d'un équipement informatique local (8) ou d'un équipement informatique local (8) connectable à un serveur distant (9) ; ladite liaison informatique (6) n'utilisant aucun réseau de téléphonie fixe ou mobile ;
ledit terminal nomade (3) comportant :
- des premiers moyens d'authentification (18) de ladite base locale (7) lorsqu'elle est connectée audit terminal nomade (3) via ladite liaison informatique (6),
- des moyens de validation (19) actionnables par l'utilisateur (1) pour valider, au sens de la présente invention, lesdites données (11) ;
ledit terminal nomade (3) étant tel que, lorsque ladite base locale (7) est connectée audit terminal nomade (3) via ladite liaison informatique (6), des moyens d'authentification (26) du terminal nomade, situés dans ladite base locale (7), permettent à ladite base locale (7) d'authentifier ledit terminal nomade (3).

28. Terminal nomade (3) selon la revendication 27 ; ledit terminal étant tel que, lorsque ladite carte à microprocesseur (5) est accouplée audit terminal nomade (3) et lorsque ledit terminal nomade (3) est connecté à ladite base locale (7) via ladite liaison informatique (6), des seconds moyens d'authentification (20) de ladite carte à microprocesseur (5), situés dans ladite base locale (7), procèdent à des opérations d'authentification de ladite carte à microprocesseur (5) ; lesdites opérations d'authentification mettant en oeuvre un processus d'échange de données (12) entre ladite carte à microprocesseur (5) et ladite base locale (7) ; lesdites données échangées (13) transitant de manière transparente via ledit terminal nomade (3) .

29. Terminal nomade (3) selon la revendication 28 ; ledit terminal nomade (3) étant tel que, lorsque ladite carte à microprocesseur (5) est accouplée audit terminal nomade (3), des troisièmes moyens d'authentification (21) coopèrent avec ladite carte à microprocesseur (5) et avec ladite base locale (7) pour authentifier l'utilisateur (1) vis-à-vis de ladite base locale (7).

30. Terminal nomade (3) selon la revendication 29 ; ledit terminal nomade (3) comportant un organe de commande (23) permettant à l'utilisateur (1) d'entrer un code confidentiel (14) dans ledit terminal nomade (3) et de transmettre ledit code à ladite carte à microprocesseur (5) ; ladite carte à microprocesseur (5) comportant un comparateur (24) permettant de contrôler ledit code confidentiel (14) ; ladite carte à microprocesseur (5) comportant en outre des moyens d'émission (25) émettant, à destination de ladite base locale (7), via le terminal nomade (3), un certificat de contrôle (15).

31. Terminal nomade (3) selon l'une quelconque des revendications 28 à 30 ; ledit terminal nomade (3) comprenant en outre des moyens inhibiteurs (34) pour inhiber ladite authentification dudit terminal nomade (3) par ladite base locale (7) en cas d'attaque physique ou logique dudit terminal nomade (3).

32. Terminal nomade (3) selon la revendication 27 ; ledit terminal nomade (3) comprenant des seconds moyens d'authentification (20) de ladite carte à microprocesseur (5) ; lesdits seconds moyens d'authentification (20) procédant aux opérations d'authentification lorsque ladite carte à microprocesseur (5) est accouplée audit terminal ; ledit terminal nomade (3) comprenant en outre des moyens inhibiteurs (34) pour inhiber ladite authentification dudit terminal nomade (3) par ladite base locale (7) en cas d'attaque physique ou logique dudit terminal nomade (3).

33. Terminal nomade (3) selon la revendication 32 ; ledit terminal nomade (3) étant tel que lesdits seconds moyens d'authentification (20) mettent en oeuvre un processus d'échange de données (12) entre ladite carte à microprocesseur (5) et ledit terminal nomade (3).

34. Terminal nomade (3) selon l'une quelconque des revendications 32 ou 33 ; ledit terminal nomade (3) étant tel que, lorsque ladite carte à microprocesseur (5) est accouplée audit terminal nomade (3), des troisièmes moyens d'authentification (21) coopèrent avec ladite carte à microprocesseur (5) pour authentifier ledit utilisateur (1).

35. Terminal nomade (3) selon la revendication 34 ; ledit terminal nomade (3) comportant un organe de commande (23) permettant à l'utilisateur (1) d'entrer un code confidentiel (14) dans ledit terminal nomade (3) et de transmettre ledit code à ladite carte à microprocesseur (5) ; ladite carte à microprocesseur (5) comportant un comparateur (24) permettant de contrôler ledit code confidentiel (14) ; ladite carte à microprocesseur (5) comportant en outre des moyens d'émission (25) émettant, à destination dudit terminal nomade (3), un certificat de contrôle (15).

36. Terminal nomade (3) selon l'une quelconque des revendications 27 à 35 ; ledit terminal nomade (3) comportant une zone mémoire (16) dans laquelle est enregistrée au moins une partie desdites données (11) transmises et/ou reçues, notamment celles relatives à ladite opération (2).

37. Terminal nomade (3) selon la revendication 36 ; ledit terminal nomade (3) comportant des moyens de lecture (27) actionnables par l'utilisateur (1) permettant de lire des données (11) confidentielles contenues dans ladite zone mémoire (16) dudit terminal nomade (3) après authentification dudit utilisateur (1) au moyen de ladite carte à microprocesseur (5).

38. Terminal nomade (3) selon l'une quelconque des revendications 27 à 37 ; ledit terminal nomade (3) comportant :
- des moyens de calcul (28) couplés à une horloge (29) et à dispositif de localisation (30) notamment du type GPS pour calculer la date, l'heure et les coordonnées géographiques de ladite opération (2),
- des moyens d'enregistrement (31) pour enregistrer dans une zone mémoire (16) protégée du terminal nomade (3), la date, l'heure et les coordonnées géographiques de ladite opération (2).

39. Terminal nomade (3) selon l'une quelconque des revendications 27 à 38 ; ledit terminal nomade (3) comportant des moyens de calcul (28) :
- enrichissant lesdites données (11) avec de nouvelles données (17), notamment la date, l'heure, les coordonnées géographiques, un historique d'opérations, des certificats,
- certifiant tout ou partie desdites données (11) et/ou desdites nouvelles données (17).

## Claims

1. A method enabling the authentication of data (11) transmitted and/or received by a user (1) and relating to a transaction (2), namely for data (11) concerning the purchase of goods or services or concerning transactions for cash withdrawals; the said user (1) having a mobile terminal (3) and a mobile object (4) at his/her disposal, being presented in the form of a card equipped with a microchip (5) liable to be linked up to the said mobile terminal (3);
the said method comprising:
- the phase for establishing an IT link (6) over a short distance between the said mobile terminal (3) and a local base (7); the said local base (7) being presented in the form of a local IT installation (8) or of a local IT installation (8) connectable to a remote server (9); the said IT link (6) not using any fixed or mobile telephone network;
- the phase, at mobile terminal level (3), for authenticating the said local base (7) when such base is connected to the said mobile terminal (3) via the said IT link (6),
- the phase, at local base level (7), for authenticating the said mobile terminal (3) when such terminal is connected to the local base (7) via the IT link (6),
- the phase for authenticating the said microchip card (5),
- the phase, for the user (1), to validate, within the meaning of this invention, the said data (11) through the mobile terminal,
- the phase, for the user (1), to authenticate him/herself.

2. A method according to claim 1; the said method being such that the authentication of the said microchip card (5) is carried out at local base level (7) when the said microchip card (5) is linked up to the said mobile terminal (3) and when the said mobile terminal (3) is connected to the said local base (7) via the said IT link (6); the said authentication triggering off a data-exchange process (12) between the said microchip card (5) and the said local base (7); the said data exchanged (13) being conveyed in a transparent manner via the said mobile terminal (3).

3. A method according to claim 2; the said method being such that the user (1) is authenticated, in relation to the said local base (7), with the said mobile terminal (3), by way of the said microchip card (5) when the said microchip card (5) is linked up to the said mobile terminal (3).

4. A method according to claim 3; the said method being such that, in order to be identified, in relation to the said local base (7),
- the user (1) keys a password (14) into the said mobile terminal (3),
- the said password (14) is verified by the said microchip card (5),
- the said microchip card (5) issues a certificate of control (15), for being conveyed to the said local base (7) via the mobile terminal (3).

5. A method according to any one of the claims 2 to 4; the said method further containing the phase for inhibiting the said authentication of the said mobile terminal (3) by the said local base (7) in the event of a physical or logical attack to the said mobile terminal (3).

6. A method according to claim 1; the said method being such that the authentication of the said microchip card (5) is carried out at mobile terminal (3) level when the said microchip card (5) is linked up to the said mobile terminal (3); the said method further containing the phase for inhibiting the said authentication of the said mobile terminal (3) by the said local base (7) in the event of a physical or logical attack to the said mobile terminal (3).

7. A method according to claim 6; the said method being such that the said authentication of the said microchip card (5) triggers off a data-exchange process (12) between the said microchip card (5) and the said mobile terminal (3).

8. A method according to either of the claims 6 or 7; the said method being such that the user (1) is authenticated, in relation to the said terminal, by way of the said microchip card (5) when the said microchip card (5) is linked up to the said mobile terminal (3),

9. A method according to claim 8; the said method being such that in order to be identified in relation to the said mobile terminal (3),
- the user (1) keys a password (14) into the said mobile terminal (3),
- the said password (14) is verified by the said microchip card (5),
- the said microchip card (5) issues a certificate of control (15), for being conveyed to the said local base (7).

10. A method according to any one of claims 1 to 9; the said method being such that it further contains the phase for recording in a memory zone (16) of the mobile terminal (3) at least a part of the said data (11) transmitted and/or received, particularly that relating to the said transaction (2).

11. A method according to claim 10; the said method being such that it further contains the phase, for the user (1), for reading the confidential data (11) contained in the said memory zone (16) of the said mobile terminal (3) after authentication from the said user (1) by way of the said microchip card (5).

12. A method according to any one of the claims 1 to 11; the said method being such that it further contains:
- the phase for determining the date, the time and the geographical data of the said transaction (2),
- the phase for recording the date, the time and the geographical data of the said transaction (2) into the protected memory zone (16) of the mobile terminal (3).

13. A method according to any one of the claims 1 to 12; the said method further containing:
- the phase, for the said terminal to supplement the said data (11) with new data (17), namely the date, the time, the geographical data, a transactions' report, certificates,
- the phase, for the said terminal, for certifying all or part of the said data (11) and/or the said new data (17).

14. A system enabling to authenticate the data (11) transmitted and/or received by a user (1) and relating to a transaction (2), namely the data (11) relating to the purchase of goods or services or to cash withdrawal transactions;
the said system containing:
- at least a mobile object (4) being presented in the form of a microchip card (5),
- at least a mobile terminal (3) liable to be linked up to the said mobile object (4),
- a local base (7) being able to be presented in the form of a local IT installation (8) or of a local IT installation (8) connectable to a remote server (9),
- an IT link (6) over a short distance between the said mobile terminal (3) and the said local base (7); the said IT link (6) not using any fixed or mobile telephone network;
the said mobile terminal (3) containing:
- the first means for authentication (18) for the said local base (7) when it is connected to the said mobile terminal (3) via the said IT link (6),
- the means for validation (19), operable by the user (1) in order to validate, within the meaning of this invention, the said data (11);
the said system further containing:
- the second means for authentication (20) in order to authenticate the said microchip card (5);
- the third means for authentication (21) in order to identify the user (1),
- the fourth means for authentication (26), located in the said local base (7), enabling the said local base (7) to authenticate the said terminal (3) when such terminal is connected to the said local base (7) via the said IT link (6).

15. A system according to claim 14; the said system being such that the said second means for authentication (20) of the said microchip card (5) is located in the said local base (7) and proceeds with the authentication procedures when the said microchip card (5) is linked up to the said mobile terminal (3) and when the said mobile terminal is connected to the said local base (7) via the said IT link (6);
the said second means for authentication (20) triggering off a data-exchange process (12) between the said microchip card (5) and the said local base (7);
the said data exchanged (13) being conveyed in a transparent manner via the said mobile terminal (3).

16. A system according to claim 15; the said system being such that the said third means for authentication (21) cooperates with the said microchip card (5) and with the said local base (7) in order to authenticate the user (1), in relation to the said local base (7), when the said microchip card (5) is linked up to the said mobile terminal (3).

17. A system according to claim 16; the said system being such that the said third means for authentication (21) comprises:
- a control device (23), located in the said mobile terminal (3), enabling the user (1) to key a password into the said mobile terminal (3) and to convey the said password to the said microchip card (5),
- a comparator (24) located inside the said microchip card (5) enabling to verify the said password (14),
- the means for issuance (25) located inside the said microchip card (5) for issuing, via the mobile terminal (3), a certificate of control (15) to be conveyed to the said local base (7).

18. A system according to any one of the claims 15 to 17 further containing the means for inhibiting (34) in order to inhibit the said authentication of the said mobile terminal (3) by the said local base (7) in the event of a physical or logical attack to the said mobile terminal (3).

19. A system according to claim 14; the said system being such that the said second means for authentication (20) of the said microchip card (5) is located in the said mobile terminal (3) and proceed with the authentication procedures when the said microchip card (5) is linked up to the said terminal; the said system further containing the means for inhibiting (34) in order to inhibit the said authentication of the said mobile terminal (3) by the said local base (7) in the event of a physical or logical attack to the said mobile terminal (3).

20. A system according to claim 19; the said system being such that the said second means of authentication (20) triggers off a data-exchange process (12) between the microchip card (5) and the said mobile terminal (3).

21. A system according to either claims 19 or 20; the said system being such that the said third means for authentication (21) cooperates with the said microchip card (5) in order to authenticate the said user (1) when the said microchip card is linked up to the said mobile terminal (3).

22. A system according to claim 21; the said system being such that the said third means of authentication (21) comprises:
- a control device (23), located inside the said mobile terminal (3), enabling the user (1) to key a password into the said mobile terminal (3) and to convey the said password to the said microchip card (5),
- a comparator (24) located inside the said microchip card (5) enabling to verify the said password (14),
- the means for issuance (25) located inside the said microchip card (5) for issuing a certificate of control (15) to be conveyed to the said mobile terminal (3).

23. A system according to any one of the claims 14 to 22; the said system being such that the said mobile terminal (3) contains a memory zone (16) in which is recorded at least a part of the said data (11) transmitted and/or received, particularly that relating to the said transaction (2).

24. A system according to claim 23; the said system being such that the said mobile terminal (3) contains the means for reading (27), operable by the user (1), enabling to read the confidential data (11) contained in the said memory zone (16) of the said mobile terminal (3) after authentication of the said user (1) by way of the said microchip card (5).

25. A system according to any one of the claims 14 to 24; the said system being such that the said mobile terminal (3) contains:
- the means for calculation (28) linked up to a clock (29) and up to a locating device (30), namely of the GPS type, in order to calculate the date, the time and geographical data of the said transaction (2),
- the means for recording (31) in order to record the date, the time and the geographical data of the said transaction (2) in a protected memory zone (16).

26. A system according to any one of the claims 14 to 25; the said system being such that the said mobile terminal (3) contains the means for calculation (28):
- supplementing the said data (11) with new data (17), namely the date, the time, the geographical data, a transactions' report, certificates,
- certifying all or part of the said data (11) and/or the said new data (17).

27. A mobile terminal (3) enabling to authenticate the data (11) transmitted and/or received by a user (1) and relating to a transaction (2), namely the data (11) relating to the purchase of goods or services or to cash withdrawal transactions;
the said mobile terminal (3) being liable to be linked up to a mobile object (4) being able to be presented in the form of a microchip card (5);
the said mobile terminal (3) being liable to be connected, via an IT link (6) over a short distance, to a local base (7) being able to be presented in the form of a local IT installation (8) or of a local IT installation (8) connectable to a remote server (9); the said IT link (6) not using any fixed or mobile telephone network;
the said mobile terminal (3) containing:
- the first means for authentication (18) of the said local base (7) when such base is connected to the said mobile terminal (3) via the said IT link (6),
- the means for validation (19), operable by the user (1), in order to validate, within the meaning of this invention, the said data (11);
the said mobile terminal (3) being such that, when the said local base (7) is connected to the said mobile terminal (3) via the said IT link (6), the means for authentication (26) of the mobile terminal, located in the said local base (7), enables the said local base (7) to authenticate the said mobile terminal (3).

28. A mobile terminal (3) according to claim 27; the said terminal being such that, when the said microchip card (5) is linked up to the said mobile terminal (3) and when the said mobile terminal (3) is connected to the said local base (7) via the said IT link (6), the second means for authentication (20) of the said microchip card (5), located inside the said local base (7), proceeds with the authentication procedures of the microchip card (5); the said authentication procedures triggering off a data-exchange (12) process between the said microchip card (5) and the said local base (7); the said data exchanged (13) being conveyed in a transparent manner via the said mobile terminal (3).

29. A mobile terminal (3) according to claim 28; the said mobile terminal (3) being such that, when the said microchip card (5) is linked up to the said mobile terminal (3), the third means for authentication (21) cooperate with the said microchip card (5) and with the said local base (7) in order to authenticate the user (1) in relation to the local base (7).

30. A mobile terminal according to claim 29; the said mobile terminal (3) containing a control device (23) enabling the user (1) to key a password into the said mobile terminal (3) and to transfer the said password to the said microchip card (5); the said microchip card (5) containing a comparator (24) enabling to control the said password (14); the said microchip card (5) further containing the means for issuance (25), for issuing, via the mobile terminal (3), a certificate of control (15) to be conveyed to the local base (7).

31. A mobile terminal (3) according to any one of the claims 28 to 30; the said mobile terminal (3) further containing the means for inhibiting (34) in order to inhibit the said authentication of the said mobile terminal (3) by the said local base (7) in the event of a physical or logical attack to the said mobile terminal (3).

32. A mobile terminal (3) according to claim 27; the said mobile terminal (3) containing the second means for authentication (29) of the said microchip card (5); the said second means for authentication (20) proceeding with authentication procedures when the said microchip card is linked up to the said terminal; the said mobile terminal (3) further containing the means for inhibiting (34) in order to inhibit the said authentication of the said mobile terminal (3) by the said local base (7) in the event of a physical or logical attack to the said mobile terminal (3).

33. A mobile terminal (3) according to claim 32; the said mobile terminal (3) being such that the said second means for authentication (20) triggers off a data-exchange (12) process between the said microchip card (5) and the said mobile terminal (3).

34. A mobile terminal (3) according to either of the claims 32 or 33; the said mobile terminal (3) being such that, when the said microchip card (5) is linked up to the said mobile terminal (3), the third means for authentication (21) cooperates with the said microchip card (5) in order to authenticate the said user (1).

35. A mobile terminal (3) according to claim 34; the said mobile terminal (3) containing a control device (23) enabling the user (1) to key a password (14) into the said mobile terminal (3) and to convey the said password to the said microchip card (5); the said microchip card (5) containing a comparator (24) enabling to verify the said password (14); the said microchip card (5) further containing the means for issuance (25) for issuing a certificate of control (15) to be conveyed to the said mobile terminal (3).

36. A mobile terminal (3) according to any one of the claims 27 to 35; the said mobile terminal (3) containing a memory zone (16) in which is recorded at least a part of the said data (11) transmitted and/or received, particularly those relating to the said transaction (2).

37. A mobile terminal (3) according to claim 36; the said mobile terminal (3) containing the means for reading (27), operable by the user (1), enabling to read the confidential data (11) contained in the said memory zone (16) of the said mobile terminal (3) after authentication of the said user (1) by way of the said microchip card (5).

38. A mobile terminal (3) according to any one of the claims 27 to 37; the said mobile terminal (3) containing:
- the means for calculation (28) linked up to a clock (29) and to a locating device (30), namely of the GPS type, in order to calculate the date, the time and the geographical data of the said transaction (2),
- the means for recording (31) in order to record the date, the time and the geographical data of the said transaction (2) into the protected memory zone (16) of the mobile terminal (3).

39. A mobile terminal (3) according to any one of claims 27 to 38; the said mobile terminal (3) containing the means for calculation:
- supplementing the said data (11) with new data (17), namely the date, the time, the geographical data, a transactions' report, certificates,
- certifying all or part of the said data (11) and/or the said new data (17).

## Patentansprüche

1. Verfahren zur Authentisierung von Daten (11), die von einem Benutzer (1) übermittelt und/oder erhalten werden und in Zusammenhang mit einer Verrichtung (2) stehen, im Speziellen aber von Daten (11), die in Zusammenhang mit dem Erwerb von Gütern oder Dienstleistungen, oder mit dem Vorgang des Abhebens von Bargeld stehen; der besagte Benutzer (1) verfügt dabei über ein mobiles Terminal (3) und über einen mobilen Gegenstand (4) in Form einer Mikroprozessorkarte (5), der mit dem besagten mobilen Terminal (3) verbunden werden kann;
das besagte Verfahren besteht dabei aus:
- dem Schritt des Aufbaus einer Computerverbindung (6) in einem geringen Abstand zwischen dem besagten mobilen Terminal (3) und einer lokalen Basis (7); die besagte lokale Basis (7) kann dabei eine lokale Computerausrüstung (8), oder eine lokale Computerausrüstung (8), die an einen ausgelagerten Server (9) angeschlossen werden kann, sein; die besagte Computerverbindung (6) nutzt dabei weder ein festes, noch ein mobiles Telefonnetz;
- dem Schritt der Authentisierung der besagten lokalen Basis (7) auf der Ebene des mobilen Terminals (3), wenn diese über die besagte Computerverbindung (6) an das mobile Terminal (3) angeschlossen ist,
- dem Schritt der Authentisierung des besagten mobilen Terminals (3) auf der Ebene der mobilen Basis (7), wenn dieses über die besagte Computerverbindung (6) an die mobile Basis (7) angeschlossen ist,
- dem Schritt der Authentisierung der besagten Mikroprozessorkarte (5),
- dem Schritt der Bestätigung der besagten Daten (11) durch den Benutzer (1) im Sinne der vorliegenden Erfindung mithilfe des mobilen Terminals,
- dem Schritt der Authentisierung des Benutzers.

2. Verfahren nach Anspruch 1; das besagte Verfahren ist dabei so ausgelegt, dass die Authentisierung der besagten Mikroprozessorkarte (5) auf Ebene der besagten mobilen Basis (7) erfolgt, wenn die besagte Mikroprozessorkarte (5) mit dem besagten mobilen Terminal (3) verbunden ist und wenn das mobile Terminal (3) über die besagte Computerverbindung (6) an die besagte lokale Basis (7) angeschlossen ist; die besagte Authentisierung setzt dabei einen Datenaustauschprozess (12) zwischen der besagten Mikroprozessorkarte (5) und der besagten lokalen Basis (7) in Gang; die genannten ausgetauschten Daten (13) laufen dabei in transparenter Art und Weise über das besagte mobile Terminal (3).

3. Verfahren nach Anspruch 2; das besagte Verfahren ist dabei so ausgelegt, dass sich der Benutzer (1) selbst mit dem besagten mobilen Terminal (3) anhand der Mikroprozessorkarte (5) gegenüber der besagten lokalen Basis (7) authentisiert, wenn die besagte Mikroprozessorkarte (5) mit dem mobilen Terminal (3) verbunden ist.

4. Verfahren nach Anspruch 3; das besagte Verfahren ist dabei so ausgelegt, dass zur Authentisierung gegenüber der besagten lokalen Basis (7),
- der Benutzer (1) einen Geheimcode (14) in das besagte mobile Terminal (3) eingibt,
- der besagte Geheimcode (14) durch die besagte Mikroprozessorkarte (5) überprüft wird,
- die besagte Mikroprozessorkarte (5) ein Prüfzertifikat (15) ausgibt, das dazu bestimmt ist, über das mobile Terminal (3) zur besagten lokalen Basis (7) gesandt zu werden.

5. Verfahren nach irgendeinem der Ansprüche 2 bis 4; das besagte Verfahren beinhaltet darüber hinaus den Schritt der Unterdrückung der besagten Authentisierung des besagten mobilen Terminals (3) durch die besagte lokale Basis (7) für den Fall eines körperlichen oder logischen Angriffs auf das mobile Terminal (3).

6. Verfahren nach Anspruch 1; das besagte Verfahren ist dabei so ausgelegt, dass die Authentisierung der besagten Mikroprozessorkarte (5) auf Ebene des besagten mobilen Terminals (3) erfolgt, wenn die besagte Mikroprozessorkarte (5) mit dem besagten mobilen Terminal (3) verbunden ist; das besagte Verfahren beinhaltet darüber hinaus den Schritt zur Unterdrückung der besagten Authentisierung des besagten mobilen Terminals (3) durch die besagte lokale Basis (7) für den Fall eines körperlichen oder logischen Angriffs auf das mobile Terminal (3).

7. Verfahren nach Anspruch 6; das besagte Verfahren ist dabei so ausgelegt, dass die besagte Authentisierung der besagten Mikroprozessorkarte (5) einen Datenaustauschprozess (12) zwischen der besagten Mikroprozessorkarte (5) und dem besagten mobilen Terminal (3) auslöst.

8. Verfahren nach irgendeinem der Ansprüche 6 oder 7; das besagte Verfahren ist dabei so ausgelegt, dass sich der Benutzer (1) mit der genannten Mikroprozessorkarte (5) gegenüber dem genannten Terminal authentisiert, wenn die besagte Mikroprozessorkarte (5) mit dem genannten mobilen Terminal (3) verbunden ist.

9. Verfahren nach Anspruch 8; das besagte Verfahren ist dabei so ausgelegt, dass zur Authentisierung gegenüber dem besagten mobilen Terminal (3)
- der Benutzer (1) einen Geheimcode (14) in das besagte mobile Terminal (3) eingibt,
- der besagte Geheimcode (14) durch die besagte Mikroprozessorkarte (5) überprüft wird,
- die besagte Mikroprozessorkarte (5) ein Prüfzertifikat (15) ausgibt, das dazu bestimmt ist, zum besagten mobilen Terminal (3) gesandt zu werden.

10. Verfahren nach irgendeinem der Ansprüche 1 bis 9; das besagte Verfahren ist dabei so ausgelegt, dass es darüber hinaus den Schritt der Speicherung zumindest eines Teils der besagten übermittelten und/oder erhaltenen Daten (11) in einer Speicherzone (16) des mobilen Terminals (3) enthält, im Speziellen jener Daten, die mit der besagten Verrichtung (2) zusammenhängen.

11. Verfahren nach Anspruch 10; das besagte Verfahren ist dabei so ausgelegt, dass es darüber hinaus für den Benutzer (1) jenen Schritt enthält, die geheimen Daten (11) zu lesen, die in der besagten Speicherzone (16) des besagten mobilen Terminals (3) nach Authentisierung des besagten Benutzers (1) mithilfe der besagten Mikroprozessorkarte (5) enthalten sind.

12. Verfahren nach irgendeinem der Ansprüche 1 bis 11; das besagte Verfahren ist dabei so ausgelegt, dass es darüber hinaus folgende Schritte enthält:
- den Schritt zur Festlegung des Datums, der Uhrzeit und der geografischen Koordinaten der besagten Verrichtung (2),
- den Schritt der Speicherung des Datums, der Uhrzeit und der geografischen Koordinaten der besagten Verrichtung (2) in einer geschützten Speicherzone (16) des mobilen Terminals (3).

13. Verfahren nach irgendeinem der Ansprüche 1 bis 12; das besagte Verfahren enthält darüber hinaus:
- den Schritt für das besagte Terminal, die besagten Daten (11) mit neuen Daten (17), im Speziellen dem Datum, der Uhrzeit, den geografischen Koordinaten, einer Verrichtungshistorie, Zertifikaten zu erweitern,
- den Schritt für das besagte Terminal, alle oder einen Teil der besagten Daten (11) und/oder der neuen Daten (17) zu beglaubigen.

14. System zur Authentisierung von Daten (11), die von einem Benutzer (1) übermittelt und/oder erhalten werden und in Zusammenhang mit einer Verrichtung (2) stehen, im Speziellen aber von Daten (11), die in Zusammenhang mit dem Erwerb von Gütern oder Dienstleistungen, oder mit dem Vorgang des Abhebens von Bargeld stehen;
das besagte System enthält:
- zumindest einen mobilen Gegenstand (4) in Form einer Mikroprozessorkarte (5),
- zumindest ein mobiles Terminal (3), das mit dem besagten mobilen Gegenstand (4) verbunden werden kann,
- zumindest eine lokale Basis (7) in Form einer lokalen Computerausrüstung (8) oder einer lokalen Computerausrüstung (8), die an einen ausgelagerten Server (9) angeschlossen werden kann,
- eine Computerverbindung (6) in einem geringen Abstand zwischen dem besagten mobilen Terminal (3) und einer lokalen Basis (7); die besagte Computerverbindung (6) nutzt dabei weder ein festes, noch ein mobiles Telefonnetz;
das mobile Terminal (3) enthält:
- erste Mittel zur Authentisierung (18) der besagten lokalen Basis (7) wenn diese über die Computerverbindung (6) an das besagte mobile Terminal (3) angeschlossen ist,
- Mittel zur Bestätigung (19), die durch den Benutzer (1) auslösbar sind, um die besagten Daten (11) im Sinne der vorliegenden Erfindung zu bestätigen;
das besagte System enthält darüber hinaus:
- zweite Authentisierungsmittel (20) zur Authentisierung der besagten Mikroprozessorkarte (5);
- dritte Authentisierungsmittel (21) zur Authentisierung des Benutzers (1),
- vierte Mittel Authentisierungsmittel (26), die sich in der besagten lokalen Basis (7) befinden, und die es der besagten lokalen Basis (7) ermöglichen, das besagte mobile Terminal (3) zu authentisieren, wenn dieses über die besagte Computerverbindung (6) an die besagte lokale Basis (7) angeschlossen ist.

15. System nach Anspruch 14; das System ist dabei so ausgelegt, dass sich die besagten zweiten Authentisierungsmittel (20) der besagten Mikroprozessorkarte (5) in der besagten lokalen Basis (7) befinden, und die besagten Authentisierungsvorgänge vornehmen, wenn die besagte Mikroprozessorkarte (5) mit dem besagten mobilen Terminal (3) verbunden ist, und wenn das besagte mobile Terminal (3) über die besagte Computerverbindung (6) an die besagte lokale Basis (7) angeschlossen ist;
die besagten zweiten Authentisierungsmittel (20) setzen dabei einen Datenaustauschprozess (12) zwischen der besagten Mikroprozessorkarte (5) und der besagten lokalen Basis (7) in Gange;
die besagten ausgetauschten Daten (13) laufen dabei in transparenter Art und Weise über das besagte mobile Terminal (3).

16. System nach Anspruch 15; das besagte System ist dabei so ausgelegt, dass die besagten dritten Authentisierungsmittel (21) mit der besagten Mikroprozessorkarte (5) und der besagten lokalen Basis (7) zusammenarbeiten, um den Benutzer (1) gegenüber der besagten lokalen Basis (7) zu authentisieren, wenn die Mikroprozessorkarte (5) mit dem besagten mobilen Terminal (3) verbunden ist.

17. System nach Anspruch 16; das besagte System ist dabei so ausgelegt, dass die besagten dritten Authentisierungsmittel (21) folgendes enthalten:
- ein Steuerorgan (23), das sich im besagten mobilen Terminal (3) befindet, und dem Benutzer (1) ermöglicht, einen Geheimcode (14) in das besagte mobile Terminal (3) einzugeben, und den besagten Code an die besagte Mikroprozessorkarte (5) zu senden,
- einen Gleichheitsprüfer (24), der sich in der besagten Mikroprozessorkarte (5) befindet, mit dem der besagte Geheimcode (14) überprüft werden kann,
- Sendevorrichtungen (25), die sich in der besagten Mikroprozessorkarte (5) befinden, und anhand derer ein Prüfzertifikat (15) über das mobile Terminal (3) an die lokale Basis (7) gesandt werden kann.

18. System nach irgendeinem der Ansprüche 15 bis 17, das darüber hinaus Unterdrückungssysteme (34) zur Unterdrückung der besagten Authentisierung des besagten mobilen Terminals (3) durch die lokale Basis (7) enthält, für den Fall eines körperlichen oder logischen Angriffs auf das besagte mobile Terminal (3)

19. System nach Anspruch 14; das besagte System ist dabei so ausgelegt, dass sich die besagten zweiten Authentisierungsmittel (20) der besagten Mikroprozessorkarte (5) im besagten mobilen Terminal (3) befinden und Authentisierungsvorgänge vornehmen, wenn die besagte Mikroprozessorkarte (5) mit dem besagten Terminal verbunden ist; das besagte System enthält darüber hinaus Unterdrückungssysteme (34) zur Unterdrückung der besagten Authentisierung des besagten mobilen Terminals (3) durch die besagte lokale Basis (7) für den Fall eines körperlichen oder logischen Angriffs auf das besagte mobile Terminal (3).

20. System nach Anspruch 19; das besagte System ist dabei so ausgelegt, dass die besagten zweiten Authentisierungsmittel (20) einen Datenaustauschprozess (12) zwischen der besagten Mikroprozessorkarte (5) und dem besagten mobilen Terminal (3) in Gang setzen.

21. System nach Anspruch 19 oder 20; das besagte System ist dabei so ausgelegt, dass die besagten dritten Authentisierungsmittel (21) mit der besagten Mikroprozessorkarte (5) zusammenarbeiten, um den besagten Benutzer (1) zu authentisieren, wenn die besagte Mikroprozessorkarte (5) mit dem besagten mobilen Terminal (3) verbunden ist.

22. System nach Anspruch 21; das besagte System ist dabei so ausgelegt, dass die besagten dritten Authentisierungsmittel (21) folgendes enthalten:
- ein Steuerorgan (23), das sich im besagten mobilen Terminal (3) befindet, und dem Benutzer (1) ermöglicht, einen Geheimcode (14) in das besagte mobile Terminal (3) einzugeben, und den besagten Code an die besagte Mikroprozessorkarte (5) zu senden,
- einen Gleichheitsprüfer (24), der sich in der besagten Mikroprozessorkarte (5) befindet, mit dem der besagte Geheimcode (14) überprüft werden kann
- Sendevorrichtungen (25), die sich in der besagten Mikroprozessorkarte (5) befinden, und anhand derer ein Prüfzertifikat (15) an das mobile Terminal (3) gesandt werden kann.

23. System nach irgendeinem der Ansprüche 14 bis 22; das besagte System ist dabei so ausgelegt, dass das besagte mobile Terminal (3) eine Speicherzone (16) enthält, in der zumindest ein Teil der besagten übermittelten und/oder erhaltenen Daten (11) gespeichert ist, im Speziellen jene Daten, die mit der besagten Verrichtung (2) zusammenhängen.

24. System nach Anspruch 23; das besagte System ist dabei so ausgelegt, dass das besagte mobile Terminal (3) Lesesysteme (27) enthält, die vom Benutzer (1) ausgelöst werden können, und anhand derer jene geheimen Daten (11) gelesen werden können, die sich nach Authentisierung des besagten Benutzers (1) anhand der Mikroprozessorkarte (5) in der besagten Speicherzone (16) des besagten mobilen Terminals (3) befinden.

25. System nach irgendeinem der Ansprüche 14 bis 24; das besagte System ist dabei so ausgelegt, dass das besagte mobile Terminal (3) folgendes enthält:
- Berechnungssysteme (28), die an eine Uhr (29) und eine Lokalisierungsvorrichtung (30), im Speziellen an ein GPS gekoppelt sind, zur Berechnung des Datums, der Uhrzeit und der geografischen Koordinaten der besagten Verrichtung (2),
- Speichersysteme (31) zum Abspeichern des Datums, der Uhrzeit und der geografischen Koordinaten der besagten Verrichtung (2) in einer geschützten Speicherzone (16) des mobilen Terminals.

26. System nach irgendeinem der Ansprüche 14 bis 25; das besagte System ist dabei so ausgelegt, dass das besagte mobile Terminal (3) Berechnungssysteme (28) enthält, die
- die besagten Daten (11) mit neuen Daten (17), im Speziellen mit dem Datum, der Uhrzeit, den geografischen Koordinaten, einer Verrichtungshistorie, Zertifikaten, erweitern,
- alle oder einen Teil der besagten Daten (11) und/oder der besagten neuen Daten (17) beglaubigen.

27. Mobiles Terminal (3) zur Authentisierung von Daten (11), die von einem Benutzer (1) übermittelt und/oder erhalten werden und in Zusammenhang mit einer Verrichtung (2) stehen, im Speziellen aber von Daten (11), die in Zusammenhang mit dem Erwerb von Gütern oder Dienstleistungen, oder mit dem Vorgang des Abhebens von Bargeld stehen;
das besagte mobile Terminal (3) sollte dabei mit einem mobilen Gegenstand (4) in Form einer Mikroprozessorkarte (5) verbunden werden können;
das mobile Terminal (3) sollte mit einer Computerverbindung (6) über eine geringe Distanz an eine lokale Basis (7) angeschlossen werden können, die eine lokale Computerausrüstung (8) oder eine lokalen Computerausrüstung (8), die an einen ausgelagerten Server (9) angeschlossen werden kann, sein kann; die besagte Computerverbindung (6) nutzt dabei weder ein festes, noch ein mobiles Telefonnetz;
das besagte mobile Terminal (3) enthält:
- erste Authentisierungsmittel (18) für die besagte lokale Basis (7), wenn diese über die besagte Computerverbindung (6) an das besagte mobile Terminal (3) angeschlossen ist,
- Mittel zur Bestätigung (19), die durch den Benutzer (1) auslösbar sind, um die besagten Daten (11) im Sinne der vorliegenden Erfindung zu bestätigen;
das besagte mobile Terminal (3) ist dabei so ausgelegt, dass wenn die lokale Basis (7) über die Computerverbindung (6) an das besagte mobile Terminal (3) angeschlossen ist, Authentisierungsmittel (26) des mobilen Terminals der lokalen Basis (7) die Möglichkeit bieten, das besagte mobile Terminal (3) zu authentisieren.

28. Mobiles Terminal (3) nach Anspruch 27; das besagte Terminal (3) ist dabei so ausgelegt, dass wenn die besagte Mikroprozessorkarte (5) mit dem besagten mobilen Terminal (3) verbunden ist, und wenn das besagte mobile Terminal (3) über die besagte Computerverbindung (6) an die besagte lokale Basis (7) angeschlossen ist, zweite Authentisierungsmittel (20) der besagten Mikroprozessorkarte (5), die sich in der besagten lokalen Basis (7) befinden, Authentisierungsvorgänge an der besagten Mikroprozessorkarte (5) vornehmen; die besagten Authentisierungsvorgänge setzen dabei einen Datenaustauschprozess (12) zwischen der besagten Mikroprozessorkarte (5) und der besagten lokalen Basis (7) in Gang; die genannten ausgetauschten Daten (13) laufen dabei in transparenter Art und Weise über das besagte mobile Terminal (3).

29. Mobiles Terminal (3) nach Anspruch 28; das besagte mobile Terminal (3) ist dabei so ausgelegt, dass wenn die besagte Mikroprozessorkarte (5) mit dem besagten mobilen Terminal (3) verbunden ist, dritte Authentisierungsmittel (21) mit der besagten Mikroprozessorkarte (5) und mit der besagten lokalen Basis(7) zusammenarbeiten, um den Benutzer (1) gegenüber der besagten lokalen Basis (7) zu authentisieren.

30. Mobiles Terminal (3) nach Anspruch 29; das besagte mobile Terminal (3) enthält dabei ein Steuerorgan (23), das es dem Benutzer (1) ermöglicht, einen Geheimcode (14) in das besagte mobile Terminal (3) einzugeben, und den besagten Geheimcode der besagten Mikroprozessorkarte (5) zu übermitteln; die besagte Mikroprozessorkarte (5) verfügt über einen Gleichheitsprüfer (24), mit dem der besagte Geheimcode (14) überprüft werden kann; die besagte Mikroprozessorkarte (5) enthält darüber hinaus Sendevorrichtungen (25), anhand derer ein Prüfzertifikat (15) über das mobile Terminal (3) an die lokale Basis (7) gesandt werden kann.

31. Mobiles Terminal (3) nach irgendeinem der Ansprüche 28 bis 30; das besagte mobile Terminal (3) enthält darüber hinaus Unterdrückungssysteme (34) zur Unterdrückung der besagten Authentisierung des besagten mobilen Terminals (3) durch die lokale Basis (7) für den Fall eines körperlichen oder logischen Angriffs auf das besagte mobile Terminal (3).

32. Mobiles Terminal (3) nach Anspruch 27; das besagte mobile Terminal (3) enthält darüber hinaus zweite Authentisierungsmittel (20) der besagten Mikroprozessorkarte (5); die besagten zweiten Authentisierungsmittel (20) nehmen Authentisierungsvorgänge vor, wenn die besagte Mikroprozessorkarte (5) mit dem besagten Terminal verbunden ist; das besagte mobile Terminal (3) enthält darüber hinaus Unterdrückungssysteme (34) zur Unterdrückung der besagten Authentisierung des besagten mobilen Terminals (3) durch die besagte lokale Basis (7) für den Fall eines körperlichen oder logischen Angriffs auf das besagte mobile Terminal (3).

33. Mobiles Terminal (3) nach Anspruch 32; das besagte mobile Terminal (3) ist dabei so ausgelegt, dass die besagten zweiten Authentisierungsmittel (20) einen Datenaustauschprozess (12) zwischen der besagten Mikroprozessorkarte (5) und dem besagten mobilen Terminal (7) in Gang setzen.

34. Mobiles Terminal (3) nach irgendeinem der Ansprüche 32 oder 33; das besagte mobile Terminal (3) ist dabei so ausgelegt, dass wenn die besagte Mikroprozessorkarte (5) mit dem besagten mobilen Terminal (3) verbunden ist, dritte Authentisierungsmittel (21) mit der besagten Mikroprozessorkarte (5) zusammenarbeiten, um den Benutzer (1) zu authentisieren.

35. Mobiles Terminal (3) nach Anspruch 34; das besagte mobile Terminal (3) enthält ein Steuerorgan (23), das es dem Benutzer (1) ermöglicht, einen Geheimcode (14) in das besagte mobile Terminal (3) einzugeben, und den besagten Code an die besagte Mikroprozessorkarte (5) zu übermitteln; die besagte Mikroprozessorkarte (5) enthält einen Gleichheitsprüfer (24), mit dem der besagte Geheimcode (14) überprüft werden kann; die besagte Mikroprozessorkarte (5) enthält darüber hinaus Sendevorrichtungen (25), anhand derer ein Prüfzertifikat (15) an das mobile Terminal (3) gesandt werden kann.

36. Mobiles Terminal (3) nach irgendeinem der Ansprüche 27 bis 35; das besagte mobile Terminal (3) enthält eine Speicherzone (16), in der zumindest ein Teil der besagten übermittelten und/oder erhaltenen Daten (11) gespeichert ist, im Speziellen jene Daten, die mit der besagten Verrichtung (2) zusammenhängen.

37. Mobiles Terminal (3) nach Anspruch 36; das besagte mobile Terminal (3) enthält Lesesysteme (27), die vom Benutzer (1) ausgelöst werden können, und anhand derer jene geheimen Daten (11) gelesen werden können, die sich nach Authentisierung des besagten Benutzers (1) anhand der Mikroprozessorkarte (5) in der besagten Speicherzone (16) des besagten mobilen Terminals (3) befinden.

38. Mobiles Terminal (3) nach irgendeinem der Ansprüche 27 bis 37; das besagte mobile Terminal (3) enthält:
- Berechnungssysteme (28), die an eine Uhr (29) und eine Lokalisierungsvorrichtung (30), im Speziellen an ein GPS gekoppelt sind, zur Berechnung des Datums, der Uhrzeit und der geografischen Koordinaten der besagten Verrichtung (2),
- Speichersysteme (31) zum Abspeichern des Datums, der Uhrzeit und der geografischen Koordinaten der besagten Verrichtung (2) in einer geschützten Speicherzone (16) des mobilen Terminals.

39. Mobiles Terminal (3) nach irgendeinem der Ansprüche 27 bis 38; das besagte mobile Terminal (3) enthält Berechnungssysteme (28):
- die die besagten Daten (11) mit neuen Daten (17), im Speziellen mit dem Datum, der Uhrzeit, den geografischen Koordinaten, einer Verrichtungshistorie, Zertifikaten, erweitern,
- die alle oder einen Teil der besagten Daten (11) und/oder der besagten neuen Daten (17) beglaubigen.
